# EUROPÄISCHE PATENTSCHRIFT

(11) **EP 1 740 453 B1**
(45) Veröffentlichungstag und Bekanntmachung des Hinweises auf die Patenterteilung: **05.05.2010**
(21) Anmeldenummer: 05744944.9
(22) Anmeldetag: 19.04.2005
(51) Int. Cl.: B63H 9/06

(54) **WASSERFAHRZEUG MIT EINEM FREI AUSFLIEGENDEN MANÖVRIERBAREN WINDANGRIFFSELEMENT ALS ANTRIEB**
WATERCRAFT COMPRISING A FREE-FLYING MANEUVERABLE WIND-ATTACKED ELEMENT AS A DRIVE UNIT
BATEAU A PROPULSION PAR UN ELEMENT SOUMIS A L'ACTION DU VENT, MANOEUVRABLE EN VOL LIBRE

(30) Priorität: 19.04.2004 DE 102004018835
(43) Veröffentlichungstag der Anmeldung: 10.01.2007
(73) Patentinhaber: Skysails GmbH & Co. KG, 21079 Hamburg (DE)
(72) Erfinder: WRAGE, Stephan, 22765 Hamburg (DE); PFEIFFER, Wolfdietrich, 21271 Asendorf (DE)
(74) Vertreter: Glawe, Delfs, Moll
(86) Internationale Anmeldenummer: PCT/EP2005/004184
(87) Internationale Veröffentlichungsnummer: WO 2005/100148

(56) Entgegenhaltungen:
- GB-A- 2 098 952

## Beschreibung

Die Erfindung betrifft ein vom Wind angetriebenes Wasserfahrzeug, bei dem ein frei ausfliegendes manövrierbares Windangriffselement nur über ein Zugseil mit dem Fahrzeugkörper verbunden ist.

Das Dokument GB2098952, das als nächstliegender Stand der Technik angesehen wird, beschreibt ein solches Wasserfahrzeug.

Ein derartiges Wasserfahrzeug ist aus der Druckschrift: Ship Propulsive Kites, An Initial Study, by J.F Wellicome and S. Williams, University of Southampton, Appendix 1 "Kite manoevering theory including Kite mass and cable drag" bekannt. Nachteilig bei diesem Fahrzeug ist, dass bei der bekannten Lösung lediglich theoretisch von der Möglichkeit ausgegangen wird, eine Flugfigur zu fliegen, wie sie auch von Lenkdrachen oder dem Kitesurfen bekannt ist. Es fehlt jedoch jede Möglichkeit, derartige Flugfiguren gezielt zu erzeugen und an die Wind- und Kursbedingungen anzupassen, so dass davon ausgegangen werden muss, dass die betreffenden Flugfiguren eher zufällig entstehen.

Der Erfindung liegt die Aufgabe zugrunde, ein Wasserfahrzeug der eingangs angegebenen Gattung anzugeben, welches den genannten Nachteil nicht aufweist und es gestattet, Flugfiguren zu erzeugen, welche an die herrschenden Flug- und Kursbedingungen optimal angepasst sind und somit eine hochgradige Ausnutzung der zur Verfügung stehenden Windenergie gestatten.

Diese Aufgabe wird mit den im kennzeichnenden Teil der Ansprüche 1 und 2 angegebenen Maßnahmen gelöst. Die Erfindung beruht dabei auf der Erkenntnis, dass durch Steuermittel, welche das Windangriffselement mit einem im wesentlichen quer zur Luftströmung des Windes gerichteten Geschwindigkeitsvektor dynamisch auf einer aus Sicht des Wasserfahrzeugs geschlossenen, in Bezug auf die Luftströmung aber im Wesentlichen senkrecht gerichteten wendel- oder sinusförmigen Flugbahn führen, der Energiegewinn, der durch die dynamisierte Flugbahn erzielbar ist, zu einem Optimum gebracht werden kann.

Gerade durch die Veränderung der aerodynamischen Form des Windangriffselements durch aktiv ansteuerbare Elemente kann dieses bei unterschiedlichen Windrichtungen und Windstärken günstig geführt werden kann, wobei die Steueraktionen bevorzugt von einer Einheit ausgehen, welche recht nahe bei dem Windangriffselement gelegen ist.

Die Steuerung erfolgt bevorzugt so, dass die aus Sicht des Wasserfahrzeugs geschlossene Flugbahn im Wesentlichen haarnadelförmig-, kreis-, acht-, doppelacht- oder mehrfachachtförmig geschlossen ist, wobei die Flugbahn insbesondere zu einer Flugfigur geschlossen ist, bei der eine Verdrehung des Zugseils nicht eintritt, damit dieses nicht unnötig belastet wird.

Die Achtform kann horizontal oder vertikal gerichtet sein, wobei an den seitlichen Rändern des Windfensters das Windangriffselement bei horizontal liegender Achtform in Richtung nach unten geführt wird, um die Gewichtskraft des Seils - bei dem hier schwächeren Windanteil - beschleunigend wirken zu lassen.

Günstig ist weiterhin, wenn bei senkrecht stehenden Achten die Außenkurven der Achten entgegen der herrschenden Windkomponente geflogen werden, damit die auf das Windangriffselement wirkende Windkomponente relativ am größten ist, denn durch die Steigung der Flugbahn ist die Auswirkung in den übrigen Teilen den Flugbahn geringer.

Bei einer vorteilhaften Ausführungsform des erfindungsgemäßen Wasserfahrzeugs ist die Flugbahn durch die Steuermittel jeweils so gewählt, dass die mittlere Zugkräftkomponenten in Kursrichtung des Wasserfahrzeugs unter Berücksichtigung der jeweiligen Verweilzeiten des Windangriffselements in den zu den jeweiligen Zugkraftkomponenten gehörigen relativen Positionen in Bezug auf das Wasserfahrzeug ein Maximum sind. Dabei ist insbesondere die Form der Flugbahn, deren Frequenz und Phasenlage der Flugbahn so gewählt, dass die Gier-, Stampf- und/oder Rollbewegung des Wasserfahrzeugs mindestens nicht unterstützt, bevorzugt aber gedämpft bzw. kompensiert werden. Insgesamt entsteht somit die Wirkung eines phasengekoppelten Systems (PLL).

Ferner ist es vorteilhaft, wenn bei Vorwindkursen das Windangriffselement Schraubenlinien in Form von liegenden Achten ausführt, während bei Kursen mit mehr raumen Wind die Achten unter zunehmender Verschlankung in eine eher senkrecht stehende Position übergehen, bis sie schließlich in Bezug auf die Luftströmung Sinuslinien bilden, wenn aus Sicht des Wasserfahrzeugs die Achten zu senkrechten Auf- und Ab- Bewegungen mutieren. Die Symmetrielinie der gewählten Form ist dabei insbesondere als Senkrechte im Wesentlichen auf der Winkelhalbierenden von Kurs und Verlängerung der Achse der Windrichtung über Angriffspunkt der Zugleine am Schiff gelegen.

Die Flugbahn ist insbesondere derart gewählt, dass in den Bereichen, in denen die Geschwindigkeit der Luftströmung in Anströmrichtung des Tragflügelprofils ein Maximum ist, die Verweildauer ebenfalls maximiert ist.

Günstig ist es weiterhin, wenn die Flugbahn spiegelsymmetrisch zu einer sich parallel zum Horizont erstreckenden oder dazu geneigten Achse ausgebildet ist.

Bei einem Kurswechsel oder einer Änderung der Windrichtung erfolgt der Übergang von einer dynamischen Flugbahn in eine statische Position, bzw. umgekehrt, derart, dass die statische Position auf der Flugbahn gelegen ist. Insbesondere sind dabei aufeinander folgende unterschiedliche Flugbahnen durch Morphing ineinander überführbar.

Bevorzugt sind bei Steuermitteln für die Flugbahn die adressierenden Steuerbefehle aus einem Speicher auslesbar, bei dem die Adressierung durch Adressendaten erfolgt, welche aus den aktuellen Wind- und Kursdaten und/oder Wellendaten gebildet wird.

Die Flugbahnsteuerung erfolgt, insbesondere bei größerem Seegang, derart, dass diejenigen Bahnteile, in denen höhere oder niedrige Zugkräfte im Seil erscheinen, mit unerwünschten Schiffsbewegungen (Rollen, Gieren, Stampfen) in der Weise koinzidieren, dass sie diesen entgegenwirken.

Bei einer anderen bevorzugten Ausführung eines Wasserfahrzeug nach der Erfindung sind zwei oder mehr Windangriffselemente an je einem oder an einem gemeinsamen Zugseil geführt, wobei eine Führung an getrennten Zugseilen so vorgenommen wird, dass eine Überschneidung der Flugbahnen verhindert ist. Insbesondere können mehrere Windangriffselemente durch Koppelelemente derart verbunden sein, dass sie sequentiell eine kreis- oder achtförmige Flugbahn durchlaufen.

Das Windangriffselement wird vorzugsweise über mindestens ein bei oder in dem Windangriffselement vorgesehenes mit diesem in Wirkverbindung stehendes aktives Antriebselement durch Veränderung seiner aerodynamischen Wirkung zum Führen in eine vorgegebene Position in Bezug auf das Wasserfahrzeug bzw. zum dynamischen Manövrieren verändert.

Besonders vorteilhaft bei der Erfindung ist der Umstand, dass die Kräfte zur Veränderung des Windangriffselements lediglich über kurze Wege übertragen werden müssen, so dass präzise Einstellungen ermöglicht sind, zumal bei der Betätigung über lange Zugleinen schon durch deren Dehnungen keine präzise Übermittlung der Steuerbefehle möglich ist. Weiterhin ist das Windangriffselement nicht dadurch Gefahren ausgesetzt, dass sich die Leinen miteinander verschlingen und es manövrierunfähig wird. Man muss sich nämlich vor Augen führen, dass die korrekte Einstellung und Führung des Windangriffselements auch für das Wasserfahrzeug insgesamt von erheblicher Bedeutung ist, da beispielsweise ein Manöver zur Fahrtrichtungsänderung stets eine Neueinstellung des Windangriffselements mit einschließen muss. Wären hier beispielsweise Leinen überkreuzt oder vertakelt, so könnte entweder die Richtungsänderung nicht ausgeführt werden oder das Windangriffselement müsste gekappt werden.

Weiterhin vorteilhaft ist, dass wenn die Betätigungselemente bzw. die Mittel zur Krafterzeugung in unmittelbarer Nähe des Windangriffselements vorgesehen sind, die entsprechenden Regeleinrichtungen auch mindestens teilweise dort unmittelbar beim Windangriffselement vorgesehen sein können, so dass auch auf aufwendige und störanfällige Signalübertragungswege weitgehend verzichtet werden kann.

Bei der Veränderung der aerodynamischen Wirkung des Windangriffselements sind alle aerodynamischen Steuerungen, wie Klappen, Ruder, sowie die Änderung seiner Ausrichtung, Anstellung und/oder Form eingeschlossen.

Die Änderung der Form kann dabei bevorzugt durch eine symmetrische oder unsymmetrische Änderung des Tragflächenprofils über eine Beeinflussung der Ausrichtung seiner Strömungsabrisskante, durch Verwindung des Tragflächenprofils, durch symmetrische und/oder durch unsymmetrische Änderung der Wölbung des Tragflächenprofils und/oder durch Änderung des Angriffspunkts des Zugseils, erfolgt. Bei anderen vorteilhaften Weiterbildungen kann die Veränderung der aerodynamischen Eigenschaften auch über eine Veränderung der Geometrie des Tragflächenprofils vorgenommen werden, wie es sich im Querschnitt des Flügels oder seiner Wölbung manifestiert. Eine derartige Änderung der Form besteht bei einem zweilagigen Tragflächenprofil vorteilhafterweise in einem Verändern des Abstands zwischen den beiden Lagen durch entsprechende Elemente.

Aus Gewichtsgründen kann es günstig sein, dass eine beidseitige und/oder gegensinnige Betätigung zur gleichsinnigen bzw. unsymmetrischen Änderung des Tragflächenprofils durch ein einziges Antriebselement erfolgt. In diesem Fall werden beispielsweise zwei Querruder jeweils gegensinnig betrieben, wobei die neutrale Position die Mittellage beider Ruder bildet.

Bei einem aus textilem Material bestehenden Windangriffselement, wie es beispielsweise ein Flügel nach Art eines Gleitschirms darstellt, kann die Veränderung der aerodynamischen Wirkung vorzugsweise durch Verstellen, vorzugsweise durch Verlängern oder Verkürzen von mindestens einer Steuerleine mittels des Antriebselements erfolgen.

Um die für die aerodynamischen Verstellungen aufzuwendenden Kräfte zu verringern kann es günstig sein, wenn mindestens eine Steuerleine mindestens eine Umlenkung oder Rückführung in Form eines Flaschenzugs aufweist.

Wenn die Steuerleinen eine matrixartige Anordnung bilden, ist die Beeinflussung eines Flügels nach Art eines Gleitschirms erleichtert. Dabei bezieht sich diese Anordnung auf einen Bereich unterhalb des Flügels, von dem aus die aerodynamischen Betätigungen gemeinsam vorgenommen werden können. Hierbei ist es günstig, wenn verschiedene Steuerleinen jeweils über ein gemeinsam angetriebenes Betätigungselement zusammengefasst angetrieben werden, da sich dadurch die Zahl der Antriebselemente verringert. Das gemeinsam angetriebene Betätigungselement kann dabei beispielsweise in einem drehbar gelagerten Element, einer Wippe, einem Hebel oder dergl. bestehen, welches gemeinsam über einen Antriebsmotor bewegt wird. Die einzelnen Steuerleinen führen dann zu unterschiedlich gewählten Befestigungspunkten auf dem gemeinsamen Betätigungselement, so dass sich aus der Geometrie des Befestigungsorts der jeweilige Hub ergibt um, mit den die betreffende Steuerleine bewegt wird. Auf diese Weise setzt sich dann die Bewegung des Betätigungselements in die gewünschte Geometrieveränderung des gesamten oder von Teilen des Windangriffselements um.

Bei einer anderen günstigen Ausführung besteht das Antriebselement aus einer elektrischen Winsch und/oder einem linearen Aktor, wobei der lineare Aktor durch ein pneumatisches Element gebildet wird, welches sich unter Überdruck in Querrichtung ausdehnt und dadurch in seiner Länge verkürzt. Derartige Elemente werden "künstlicher Muskel" genannt und vorzugsweise pneumatisch angetrieben.

Zur Energiegewinnung ist es günstig, wenn in dem in der Nähe des Windangriffselements vorgesehenen und strömungsgünstig ausgebildeten Behältnis eine Windturbine vorgesehen ist, welche auf einen elektrischen Generator wirkt, der dann einen elektrischen Energiespeicher auflädt. Bei Verwendung von pneumatischen Elementen als Aktoren kann auch eine Turbine vorgesehen sein, die einen nachgeschalteten Verdichter antreibt, der dann den Überdruck für die pneumatischen Elemente liefert. Als Energiespeicher dient in diesem Fall ein Druckspeicher.

In dem in der Nähe des Windangriffselements vorgesehenen Behältnis sind auch die Mittel zur Steuerung des Windangriffselements untergebracht, welche Ausgangssignale zur Ansteuerung der Antriebselemente (Aktoren) liefern. Hierbei sind insbesondere Mittel vorgesehen, um ein erstes Steuersignal für das Antriebselement aus einem Signal für den Kurs des Fahrzeugs, die Windrichtung und/oder die Windgeschwindigkeit zu ermitteln.

Günstig ist es, wenn als Windrichtung für die Steuerung von der Richtung des scheinbaren Windes (am Windangriffselement) ausgegangen wird, da dessen Ausrichtung hierdurch bestimmt ist.

Das Windangriffselement wird bevorzugt durch eine Art Autopilot gesteuert, wobei ein Sensorelement vorgesehen ist, dem mindestens ein, vorzugsweise als Beschleunigungsmesser ausgestaltetes Wandlerelement nachgeschaltet ist, welches ein zweites Steuersignal an das Antriebselement abgibt. Ein weiteres Sensorelement gibt ein Ausgangssignal mit Bezug auf seine Position und/Ausrichtung im Raum ab, welche insbesondere auf die Position des Schiffes bezogen ist.

Wenn ein anderes Sensorelement vorgesehen ist, welches einen bevorstehenden oder bereits eingetretenen Strömungsabriss anzeigt oder als ein im Bereich der umströmten Oberfläche des Windangriffselements vorgesehenes Element ausgestaltet ist, welches bei anliegender Luftströmung ein Ausgangssignal abgibt, kann die Flugsteuerung so ausgelegt werden, dass im Falle eines Stalls ein Absinken des Windangriffselements verhindert wird.

Bei einer günstigen Ausführung der Erfindung ist das Antriebselement und/oder das Sensorelement in einem Behältnis vorgesehen ist, welches den Angriffspunkt für das Zugseil bildet und von dem Halte- und Steuerleinen ausgehen, mit denen das Windangriffselement verbunden ist. Dieses Behältnis ist bevorzugt strömungsgünstig ausgeführt und kann auch eine Windturbine zur Energiegewinnung für die aerodynamische Steuerung des Windangriffselements aufweisen.

Es hat sich weiterhin als vorteilhaft erwiesen, wenn Mittel vorgesehen sind, um ein drittes Steuersignal zur räumlichen Ausrichtung des Windangriffselements durch ein externes von einer mit dem Wasserfahrzeug verbundenen Bordeinheit zu erzeugen und dass weiterhin Signalübertragungsmittel vorgesehen sind, um das dritte Steuersignal von der Bordeinheit an die Selbststeuervorrichtung zu übermitteln, wobei es sich bevorzugt bei dem dritten Steuersignal um ein Diffential-GPS oder ein anderes Navigationssignal handelt, welches eine Information über die Position des Windangriffselements relativ zum Wasserfahrzeug enthält.

Wenn zusätzliche Speichermittel und Vergleichermittel vorgesehen sind, welche eine Speicherung von vorangehenden Zeitpunkten zugeordneten Signalen mit zeitlich später erscheinenden Signalen in der Weise ermöglichen, dass zeitlich aufeinander folgende Manöverzustände vergleichbar sind, kann eine vorhersehende Steuerung des Windangriffselements in dem Sinne erzeugt werden, dass bei Einleitung eines Manövers, die vorsehbaren Folgen für den Schiffsbetrieb berücksichtigt werden.

Die dargestellte Erfindung eignet sich insbesondere für seegehende Schiffe oder solche mit Fahrtgebieten im Bereich großer Seen.

Weitere günstige Ausführungsbeispiele ergeben sich aus den Unteransprüchen.

Vorteilhafte Ausführungsbeispiele sind in den Figuren dargestellt. Es zeigen:
Fig. 1 ein von dem erfindungsgemäßen Drachen-System gezogenes Schiff in schräger Draufsicht,
Fig. 1a ein Koordinatensystem, welches bei der nachfolgenden Beschreibung als Bezugssystem dient,
Fig. 1b ein Ausführungsbeispiel des erfindungsgemäßen Windangriffselements in Form eines Gleitschirms gemäß der Erfindung.
Fig. 2 ein Prinzipschaltbild der Steuerung des erfindungsgemäßen Windangriffselements in schematischer Darstellung,
Fig. 3 ein Blockschaltbild der Steuerung des erfindungsgemäßen Windantriebssystems als Blockschaltbild in detaillierter Darstellung,
Fig. 4 eine Steuereinrichtung für das Windangriffselement in perspektivischer Darstellung,
Fig. 5 ein Wasserfahrzeug mit einem Windangriffselement mit Flugmanövern in unterschiedlichen Positionen in perspektivischer Darstellung,

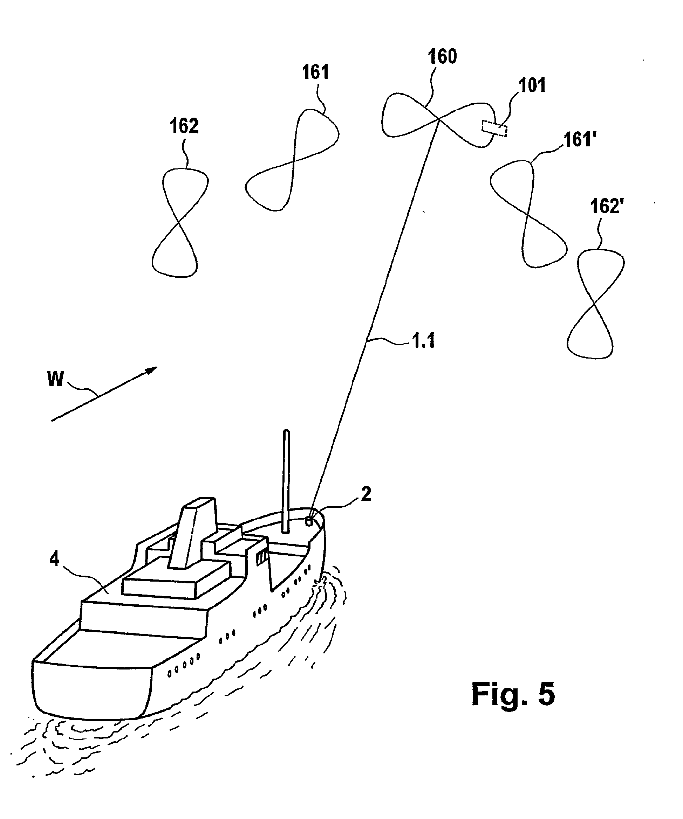

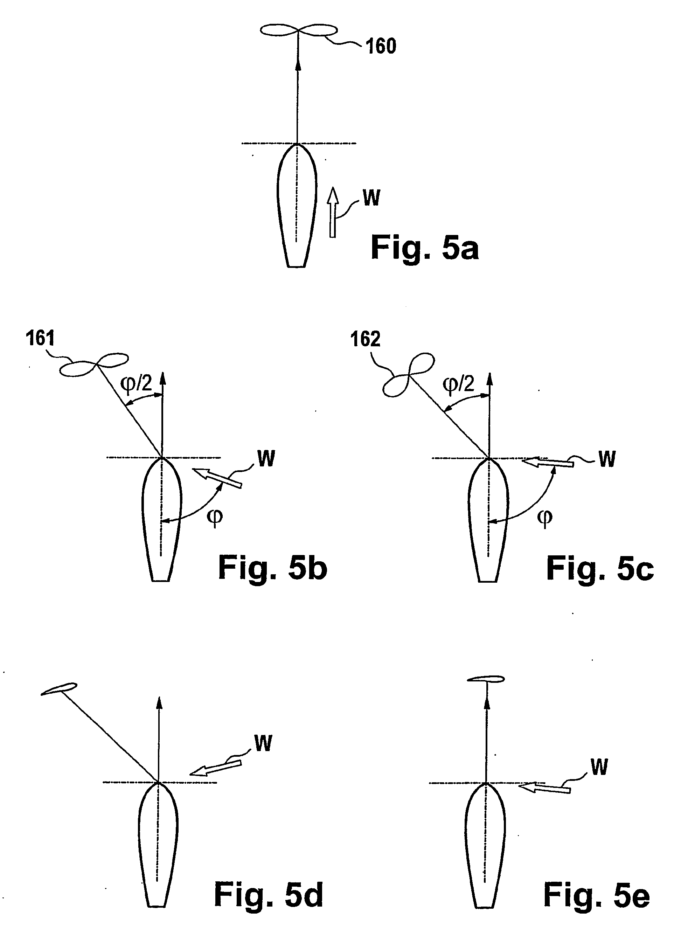

Fig. 5 a bis e verschiedene Flugpositionen des Windangriffselements in der Draufsicht,

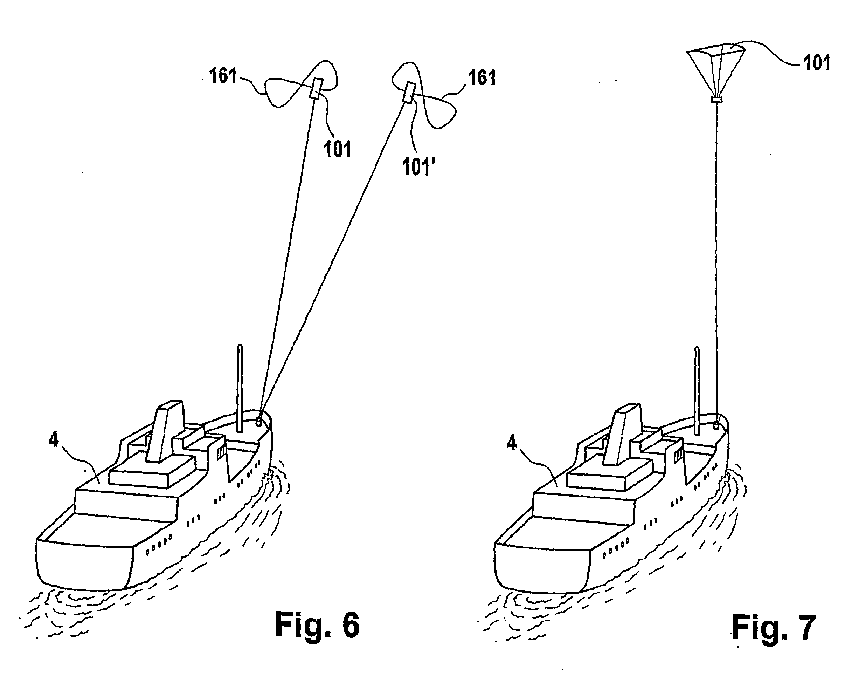

Fig. 6 ein Ausführungsbeispiel der Erfindung mit zwei Windangriffselementen,
Fig. 7 ein Ausführungsbeispiel der Erfindung mit einem Windangriffselement in der "Sicherheitsposition" sowie

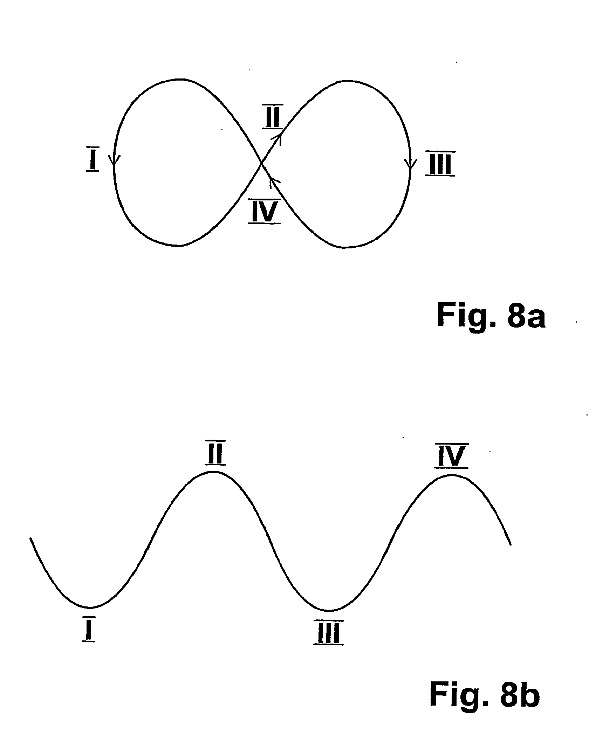

Fig. 8 eine schematische Darstellung der Steuerung von Flugfiguren in Koordination zu Schiffsbewegungen.

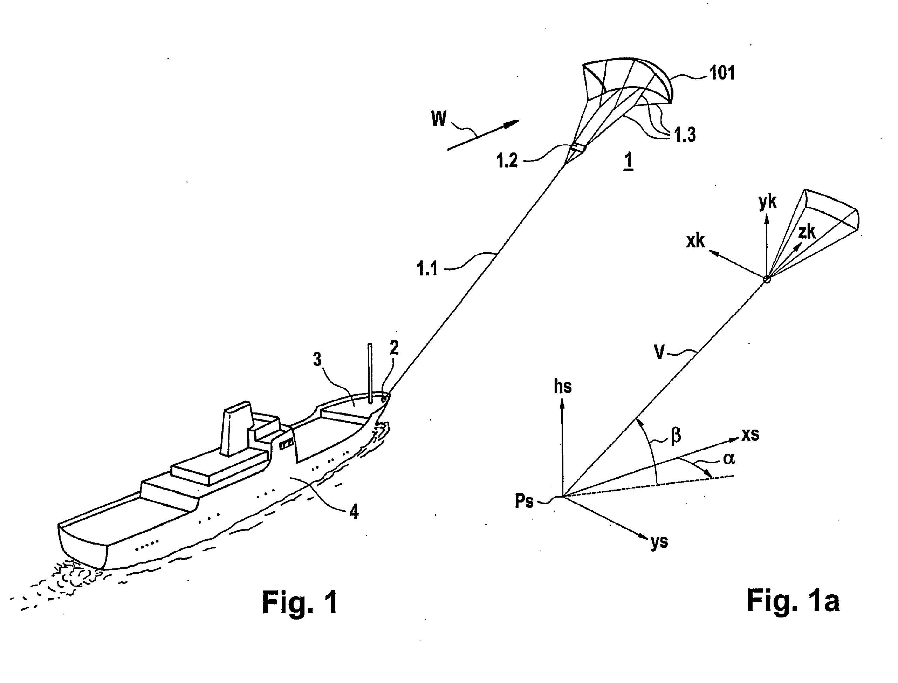

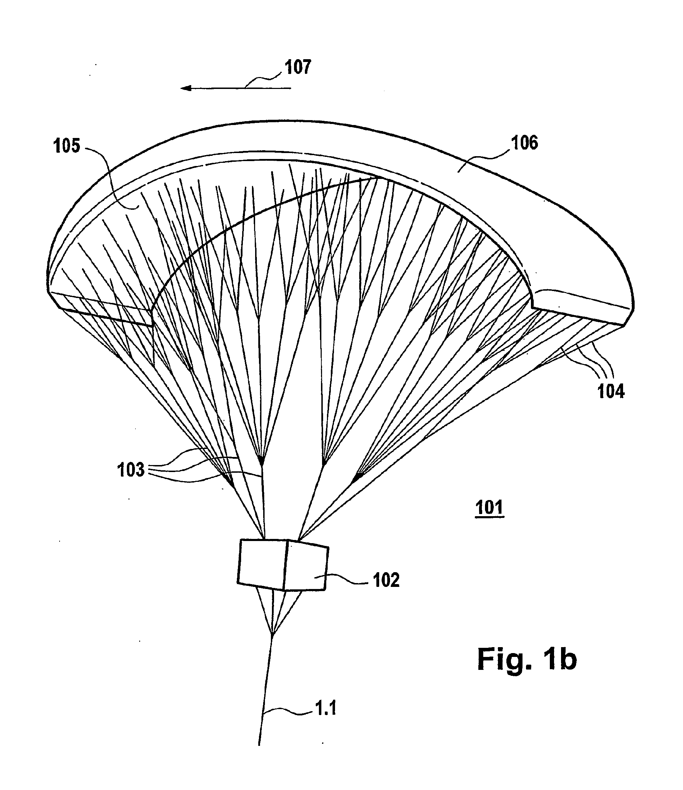

In Fig. 1 ist in den schräger Draufsicht ein von dem erfindungsgemäßen Drachensystem gezogenes Schiff wiedergegeben. Dabei ist ein Windangriffselement 1 über einen Zugseil 1.1 mit einer Kraftangriffsvorrichtung 2, die im Bugbereich eines Schiffes 4 vorgesehen ist, mit letzterem verbunden. Das Zugseil 1.1 ist zu einer zentralen Gondel 1.2 geführt, von der aus eine Anzahl von Halteleinen 1.3 ausgeht, welche zu dem nach Art eines Gleitschirms mit Drachenprofil ausgestalteten Windangriffselement 1 geführt sind und diesem die notwendige Form geben. Zu den Einzelheiten hierzu wird auf die Beschreibung weiter unten verwiesen. Die scheinbare Windrichtung im Bereich des Windangriffelements 1 ist mit W bezeichnet. Der entsprechende Windvektor ist durch seine Größe und Richtung gekennzeichnet. Gegebenenfalls wird seine zeitliche Veränderung noch durch eine die Böigkeit kennzeichnende Größe B gekennzeichnet, die zeitlich mittlere Abweichung der Windgeschwindigkeit vom mittleren Wert bildet und als Skala darstellbar ist, der quasi den Radius einer Kugel um die Spitze des Windvektors W bildet.

In Fig. 1a ist ein Koordinatensystem wiedergegeben, welches bei der nachfolgenden Beschreibung als Bezugssystem herangezogen wird. Dabei gibt xs die Fahrtrichtung des Schiffes an, und ys ist die Richtung quer zur Fahrtrichtung. Das Koordinatensystem ist dabei fest mit einem Punkt Ps des Schiffes verbunden zu denken. Bei diesem Punkt handelt es sich bevorzugt um den Kraftangriffspunkt 2 im Bugbereich. Die Höhe hs entspricht dabei der Richtung der Achse z des konventionellen Koordinatensystems. Sie gibt die Höhe über dem Bezugspunkt Ps an. Dieser Bezugspunkt ist in bevorzugter Weise der Ort der Anbringung der GPS-Antenne eines Bord eigenen GPS-Gerätes, so dass die Koordinaten eines Punktes außerhalb von Ps, bei dem sich ein anderes GPS-Gerät befindet, durch Differenzbildung der von beiden Geräten ausgegebenen Koordinaten erzeugt werden können. (Sollte sich die GPS-Antenne das Bord eigenen GPS-Gerätes entfernt vom Bezugspunkt Ps befinden, so kann dies durch Hinzufügen einer festen Koordinatendifferenz berücksichtigt werden.)

Zur Vereinfachung soll nachfolgend von einem Polarkoordinatensystem ausgegangen werden, bei dem der Winkel α den Azimutwinkel und der Winkel β den Höhenwinkel bildet. Die Richtung des Vektors V zeigt dabei also auf die Gondel 1.2 des Windangriffselements 1. Es handelt sich hierbei gleichsam um ein "geographisches Koordinatensystem", da die Gondel 1.2 bzw. das Windangriffselement 1 sich im Wesentlichen auf der Oberfläche einer Kugel bewegen. Der Azimutwinkel α und Höhenwinkel β geben damit so etwas wie die geographische Länge und Breite der Position der Gondel auf der durch den Vektor V aufgespannten "Weltkugel". Die Länge des Vektors V gibt grob die Länge des Zugseils 1.1 an, wobei dessen Durchhang zunächst außer Betracht bleiben soll.

Die Gondel 1.2 des Windangriffselements ist nach einem eigenen Koordinatensystem mit den Richtungen xk, yk und zk ausgerichtet, wobei zk in die Richtung der Verlängerung des Vektors V weist. Die Drehung der Gondel 1.2 des Windangriffselements 1 um die Hochachse zk wird mit dem Gierwinkel (Yaw) bezeichnet. Durch eine Veränderung des Gierwinkels wird eine Änderung der Flugrichtung des Windangriffselements 1 bewirkt. Der Gierwinkel kann u. a. durch die aktive Ansteuerung von (weiter unten beschriebenen) Bremsklappen des das Windangriffselement 1 bildenden Gleitschirms verändert werden. Er bewirkt eine Richtungsänderung, und dieser Vorgang ist mit dem Lenken eines Lenkdrachens vergleichbar. Eine Drehung um die Längsachse xk stellt eine Rollbewegung (Roll) dar und wird nicht aktiv gesteuert. Aus der Rollbewegung bzw. der entsprechenden Abweichung der Richtung von zk von V lässt sich der Durchhang des Zugseils 1.1 auf Grund der Schwerkraft ermitteln, während die Drehung um die Querachse yk die Neigung (Pitch) des Windangriffselements um die Querachse bildet und durch Böen und deren Einwirkung auf das Zugseil 1.1 hervorgerufen sein kann. Dieses Bezugssystem bildet die Basis für das Verständnis der Beschreibung des weiter unten beschriebenen Schiff-Drachen-Systems.

In Fig. 1b ist ein Ausführungsbeispiel eines erfindungsgemäßen Windangriffselements schematisch dargestellt. Das Windangriffselement bildet bei der dargestellten Ausführungsform einen Gleitschirm 101 mit einem Behältnis 102 für die Steuerung, wie es weiter unten näher beschrieben werden wird. Von dem an dem Zugseil 1.1 befestigten Behältnis 102 gehen Halteleinen 103 aus, welche in Verzweigungen 104 in Form eines Leinenbaums übergehen, die mit einer unteren textilen Deckschicht 105 verbunden sind. Eine obere textile Deckschicht 106 bildet den Abschluss nach oben. Die beiden Deckschichten sind durch interne - in der Figur nicht sichtbare - Verbindungsleinen oder entsprechende Verbindungselemente, wie zum Beispiel Textilrippen, zusammengehalten, wobei das durch die beiden Deckschichten gebildete Tragflügelprofil durch einen internen Luftüberdruck stabilisiert wird, der sich über Öffnungen an der Drachenvorderkante (in der Zeichnung links) aufbaut, welche in der Zeichnung aus Gründen der Übersichtlichkeit ebenfalls fortgelassen sind. Die Flugrichtung ist mit dem Pfeil 107 gekennzeichnet.

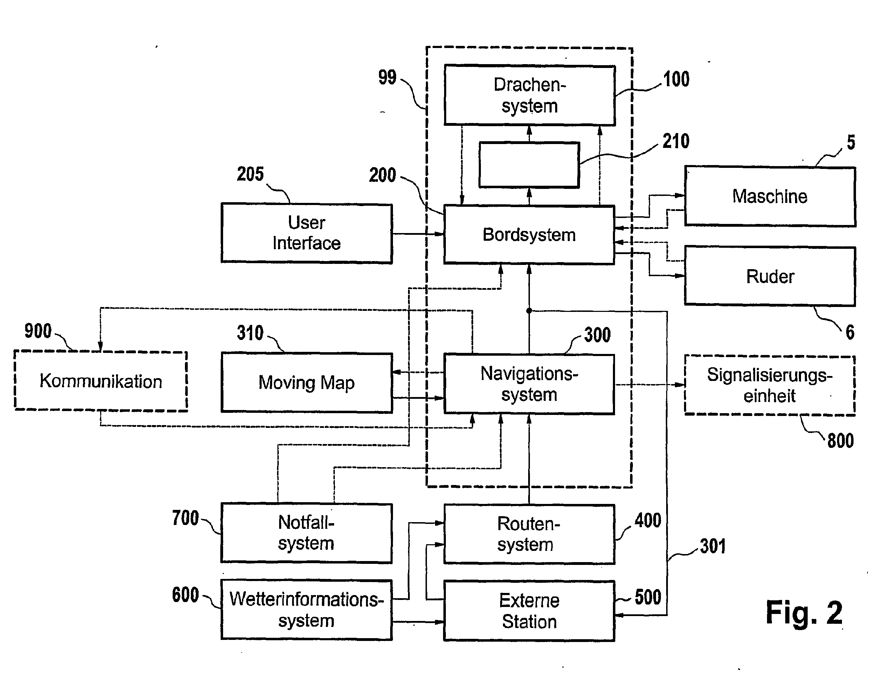

In Fig. 2 ist eine Prinzipdarstellung des erfindungsgemäßen Windantriebssystems als Blockschaltbild wiedergegeben. Das Bild dient auch zur Orientierung bei der nachfolgenden Beschreibung der einzelnen Systembestandteile. Die in der Übersichtsdarstellung verwendeten 100-ter-Bezugszeichen bilden auch die Gruppenbezeichnung der weiter unten jeweils detailliert dargestellten Systemteile. (Eine gestrichelte Linie 99 umgrenzt dabei diejenigen Baugruppen, welche mindestens einem konventionellen Schiff hinzugefügt werden müssen, damit es mit dem erfindungsgemäßen Windantrieb zusätzlich ausgestattet ist.) Das Windangriffssystem 100 umfasst das Windangriffselement sowie das dazugehörige Steuersystem, so weit es unmittelbar bei diesen angeordnet ist. Die Anordnung kann dabei sowohl in einer am Ende des Zugseils befindlichen Gondel, von der die Halteleinen augehen, angeordnet sein oder aber auch unmittelbar in das Windangriffselement eingearbeitet sein. Das Steuersystem umfasst im Wesentlichen einen Autopiloten, der die Lage- und Flugbahnsteuerung des Windangriffselements kontrolliert.

Das Windangriffssystem 100 ist über das Zugseil und eine Winsch 210 (einschließlich Zugseil) und gestrichelt dargestellte Kommunikationswege mit dem Bordsystem 200 verbunden mit einer Bedienoberfläche (User Interface) 205, welches ein Steuersystem umfasst, das sowohl die Drachenposition kontrolliert als auch an die Maschine 5 und das Ruder 6 des Schiffes die notwendigen Steuerbefehle abgibt. Mit dem Windangriffselement ist das Bordsystem über verschiedene Kommunikationswege verbunden, welche ermöglichen, sowohl die Drachenposition vom Bordsystem im Grundsatz vorzugeben als auch vom Windangriffssystem her Informationen zu empfangen, die für das Bordsystem von Bedeutung sind.

Dem Bordsystem 200 vorgeschaltet ist ein Navigationssystem 300, welches an das Bordsystem die einzuhaltenden Route des Schiffes unter Berücksichtigung von Kosten, Zeiten, Geschwindigkeit und Windausnutzung sowie gegebenenfalls die Windrichtung und Windstärke übermittelt. Zur Windinformationen kann auch eine Kennzeichnung gehören, welche die Böigkeit des Windes charakterisiert. Dazu können ferner noch Informationen betreffend den Seegang bzw. die daraus resultierende Schiffsbewegung kommen. (Die Wind- und Wetterdaten stammen dabei ursprünglich aus dem weiter unten dargestellten Wetterinformationssystem 600.) Das Navigationssystem wird unterstützt von dem navigatorischen Informationsfundus (Moving Map) 310.

Aus den Kurs-, Wind- und Welleninformationen werden Signale generiert, welche das Bordsystem 200 ansteuern und eine entsprechende Einstellung des Drachensystems 100 bewirken. Das Bordsystem 200 erzeugt weiterhin Ansteuersignale für die Maschine 5 und das Ruder 6.

Das Navigationssystem 300 wird von einem Routensystem 400 angesteuert, welches den Weg des Schiffes über die dem Schiffsbetrieb zu Grunde liegenden ökonomischen Basis ermittelt. Das Routensystem 400 wird auf der Basis von einer externen Station 500 vorgegebenen Daten angesteuert, welche mit den Daten eines Wetterinformationssystems 600 abgeglichen werden. Die von dem Navigationssystem 300 aktuell ermittelten Kursdaten werden über eine Rückkopplungsverbindung 301 (über Funk, Satellit) an die externe Station 500 zurückgemeldet. Die Daten sind auch von anderen mit dem erfindungsgemäßen System ausgestatten Schiffen empfangbar und können zur lokalen Aktualisierung des Wettersystems verwendet werden. Auf diese Weise können aktuelle, lokal bedingte Kursänderungen bei der weiteren externen Routenvorgabe wie berücksichtigt werden.

Es ist ersichtlich, dass die Positionierung des Drachensystems 100 in Abhängigkeit von den Kursdaten so erfolgt, dass sowohl auf Grund der Wetterbedingungen (aktuell vorherrschenden Winde und Seegangsbedingungen) als auch unter Berücksichtigung der ökonomischen Grenzbedingungen, welche einen möglichst Kosten sparenden Schiffsbetrieb erbringen sollen, eine optimale Routenvorgabe erfolgt.

Ein Notfallsystem 700 gibt im Falle eines unvorhergesehenen Ereignisses, welches ein sofortiges Handeln in Form eines Notmanövers erzwingt, die erforderlichen Steuerbefehle.

In weiteren Blöcken 800 bzw. 900 sind jeweils das Signalisierungssystem und Kommunikationssystem zusammengefasst, welches die Navigation mit weiteren Verkehrsteilnehmern abstimmt. Zum Signalisierungssystem gehört eine Navigationssicherheitsbeleuchtung sowie die Aussendung von eigenen Navigationsdaten über Funk, welche andere in der Umgebung befindliche Schiffe über das gesetzte Windangriffssystem und die beabsichtigte Route bzw. den aktuellen Kurs informieren. Das Kommunikationssystem umfasst dagegen alle Systeme, welche den weiteren Informationsaustausch betreffen.

Die Hauptwege des Datenflusses sind in Fig. 2 als durchgezogene Linien dargestellt, während die übrigen Nachrichtenwege gestrichelt wiedergegeben sind.

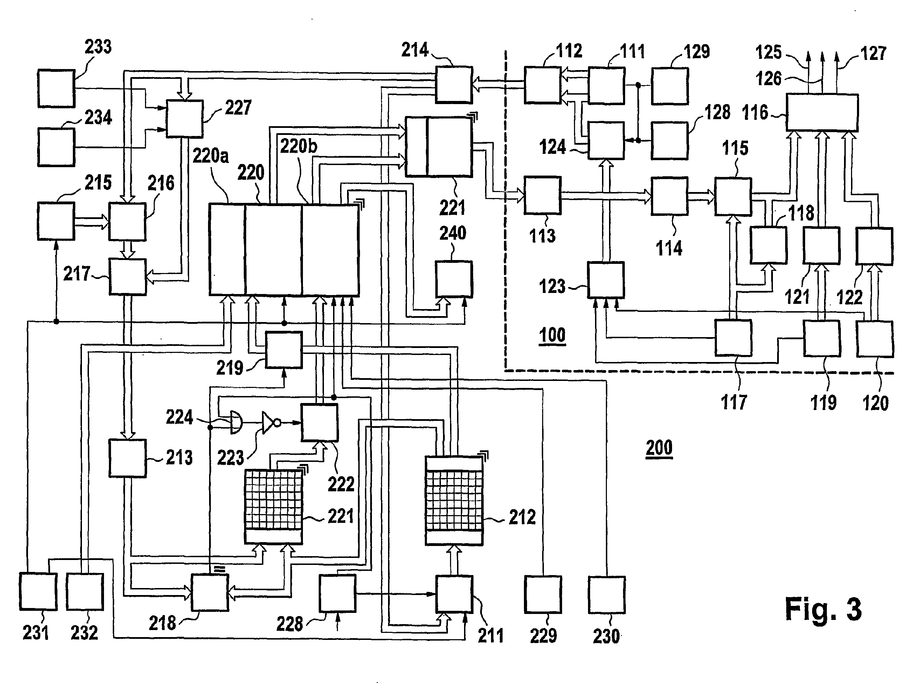

In Fig. 3 sind der Block 100, welcher das Windangriffssystem umfasst, sowie der Block 200 mit dem Bordsystem aus Fig. 2 näher dargestellt. Es wird hier die Positionierung und Steuerung des Drachens 101 beschrieben. Die Windrichtungs- und Windgeschwindigkeitsinformation, einschließlich Böigkeitskennwert sowie Seegangsinformationen gelangt in einen Zwischenspeicher 211, in dem diese Daten zur Pufferung festgehalten werden. Da sich die Windrichtung und alle Einstellungen des Drachens auf den scheinbaren Wind beziehen, ist die Kursinformation bei der Verarbeitung entbehrlich. Die Einstellung und das Manövrieren des Windangriffselements in Bezug auf das Schiff erfordert keine Kenntnis des aktuellen Kurses, da sich alle Manöver in Bezug auf das Schiff und unter Einwirkung des auf den Drachen einwirkenden scheinbaren Winds beziehen. Die Windinformationen stammen beim Setzen des Drachen 101 zunächst aus dem Wetterinformationssystem 600 in Figur 2, wenn es darum geht, den Drachen zu positionieren. Sobald dessen eigene Windmessung nach dem Start jedoch in Funktion ist, wird der scheinbare Wind am Ort des Windangriffselements selbst bestimmt, da dieser für die Positionierung bestimmend ist.

Die Wind- und Seegangsdaten bilden insgesamt einen Datensatz, welcher einen eine Nachschlagetabelle bildenden Speicher 212 für die Sollposition und den Manövertyp des Windangriffselements adressiert. Diese Nachschlagetabelle ist wie ein normaler adressierbarer Speicher organisiert, wobei die Ausgangsdaten des Zwischenspeichers 211 als Adressensignale die einzelnen Speicherplätze adressieren, bei denen die zu den adressierten Daten gehörigen Zustandsdaten des Windangriffselements abgelegt sind. Eine derartige "Nachschlagetabelle" verknüpft nach Art eines "Nur-Lese-Speichers" (ROM) gemäß einem vorgegebenen funktionalen Zusammenhäng die Eingangs- und Ausgangsdaten miteinander, lässt sich also als mathematische Zuordnung (Funktion) verstehen. Die entsprechenden Blöcke bilden jedoch nur eine beispielhafte Realisierung und können auch durch beliebige andere Funktionsglieder oder Baugruppen ersetzt werden. Hierbei kann es sich beispielsweise um einen Mikroprozessor handeln, bei dem die Steuerungssoftware in einem entsprechenden Speicher festgehalten ist oder aber auch um eine elektrische Schaltung, bei der der funktionale Zusammenhang nach Art eines Analogrechners durch die beteiligten elektrischen Komponenten festgelegt ist. Die Darstellung als Nachschlagetabelle ist hier der Übersichtlichkeit halber gewählt, weil eine Lösung mit einem Mikroprozessor beispielsweise nur deswegen unübersichtlicher darzustellen ist, weil die verschiedenen nacheinander abzuwickelnden Programmschritte aufwendige Überlegungen dahingehend erfordern, welche Programmteile dem Mikroprozessor nacheinander zuzuführen sind.

Bei der gewählten Ausführung können die Steuersignale parallel verarbeitet werden, wobei allerdings solche Schaltglieder, die eine Aktivierung der dargestellten Blöcke zu bestimmten Zeiten und die entsprechenden Regelungen bewirken, nicht dargestellt sind. Es wird der Einfachheit halber davon ausgegangen, dass ein eingehendes Steuersignal, welches von bisher anstehenden Signalzustand abweicht, die Verarbeitung in den nachfolgenden Blöcken auslöst, welche den betreffenden erreichten Zustand beibehalten, bis eine Signaländerung eine neue Verarbeitung erzwingt.

Die Zustandsdaten beinhalten also zum einen die Sollposition des Windangriffselements, d. h. seine Richtung in Bezug auf das Schiff und die auszubringende Länge des Zugseils. Darüber hinaus enthalten sie gegebenenfalls auch eine Informationen darüber, ob und wenn ja nach welchem abgespeicherten Programm der Drachen 101 manövriert werden soll. Während der Drachen in einigen Positionen statisch, d. h. feststehend geführt wird, ist es für den Schiffsbetrieb in bestimmten Fällen günstiger, wenn der Drachen dynamisch geführt wird, d. h. vorbestimmte Flugfiguren ausgeführt werden, da sich dadurch seine Relativgeschwindigkeit zum Wind und infolgedessen auch seine Zugleistung erhöht. In einem weiteren Speicher 213 wird die aktuelle Position des Drachens festgehalten, wie sie durch das Navigationssystem des Drachens 101 bestimmt wird.

Die im Speicher 213 festgehaltene Ist-Position des Drachens bezieht sich auf das Schiff und wird vorzugsweise durch Differenzbildung zweier GPS-Signale ermittelt. Hierbei handelt es sich zum einen um den GPS-Empfänger 124 des Drachens 101 innerhalb des Drachensystems 100, welches mit dem fliegenden Drachen 101 verbunden ist. Die in der Flugposition des Drachens 101 ermittelten Positionsdaten werden mittels eines Senders 112 an einen Empfänger 214 übermittelt, welcher sich an Bord des Schiffes befindet. Ein weiterer GPS-Empfänger 215 ist ebenfalls an Bord des Schiffes vorgesehen. Sein Ausgangssignal wird zusammen mit dem Ausgangssignal des Empfängers 214 einer Subtrahiereinheit 216 zugeführt, mit der das Differential-GPS-Signal erzeugt wird. In einem der Subtrahiereinheit 216 nachgeschalteten Block 217 werden die Differenz-Positionsdaten in Polarkoordinaten umgerechnet, welche sich auf den Abstand zwischen der Winsch 2 und in die Position des Windangriffselements beziehen. Es handelt sich um die Winkel α und β entsprechend Fig. 1a sowie die Seillänge "L". Die so erhaltenen Differential-GPS-Positionsdaten weisen eine große Genauigkeit auf, wenn sie gleichzeitig ermittelt werden und der GPS-Empfänger des Schiffes an einem Ort installiert ist, der möglichst wenig von Schiffsbewegungen betroffen ist bzw. wenn die Bewegungen kompensiert werden.

Weiterhin ist es dabei notwendig, die Koordinatendifferenz zwischen der Positionen der Winsch und des GPS-Empfänger des Schiffes durch Subtraktion eines festen Wertes zu berücksichtigen. Die durch den so gebildeten Differential-GPS-Empfänger ermittelte Position wird in Zeitabständen ermittelt. Falls sie in ihrer Präzision nicht ausreicht, kann sie durch Werte, die über Beschleunigungsaufnehmer 117, 119 und 120 ermittelt werden, gestützt werden. Die entsprechenden Berechnungen, die eine Integration enthalten, wird in der Baugruppe 123 ausgeführt. Da es sich innerhalb der Zeitintervalle, in denen integriert werden muss, lediglich um die Zeiten handelt, die bis zum nächsten GPS-Positions-Signal vergehen, brauchen die Integratoren keine Qualitätsanforderungen zu erfüllen, die eine Stabilität über lange Zeiträume garantieren würde. (Die Beschleunigungsaufnehmer dienen an sich zur Stabilisierung der Flugmanöver, wie es weiter unten beschrieben ist - erhalten somit also eine Zweitfunktion). Des weiteren sind noch ein Höhenmesser 129, vorzugsweise als Luftdruckmesser ausgeführt, und ein Erdmagnetfeldsensor 128 vorgesehen, deren Daten ebenfalls dem Speicher für das Navigationssignal 124 zugeführt werden.

Eine weitere Möglichkeit zur Ermittlung der Ist-Position des Windangriffselements in Relation zum Schiff ist die Nutzung der zum Schiff übertragenen Daten des Höhenmessers 129 und des Erdmagnetfeldsensors 128. Diese Daten werden auf dem Schiff in Block 227 übertragen und festgehalten. In Block 227 findet dann eine Differenzbildung mit den Daten des Höhenmessers 233.am Schiff und des Erdmagnetfeldsensors 234 am Schiff statt. Handelt es sich bei dem Höhenmesser 129 um einen Luftdruckmesser, können für die Bestimmung des Luftdrucks am Schiff aber auch Wetterdaten aus Block 600 (Isobaren) genutzt werden. Die so ermittelten Positionsinformationen werden Block 217 zugeführt und gegebenenfalls mit den GPS-Daten abgeglichen. Auf diese Weise stützen sich die Positionsinformationen zweier unabhängiger Systeme gegenseitig, und bei Ausfall eines Systems stehen die benötigten Daten weiterhin zur Verfügung.

Die aus dem Speicher 212 ausgelesene Sollposition des Drachen wird nun einerseits einem Vergleicher 218 zugeführt, der ein Signal ausgibt, wenn die Ist-Position des Windangriffssystems 100, die in dem Speicher 213 vorhanden ist, mit der aus dem Speicher 212 ausgelesenen Sollposition übereinstimmt. In diesem Fall wird über eine Freigabeschaltung 219 ein den ausgewählten Manövertyp kennzeichnender Datensatz aus dem Manövertyp-Speicher 220 ausgelesen. (Dabei kann ein statischer Flugzustand sich aber auch dadurch auszeichnen, dass der Drachen keine Manöver ausführt, sondern seine Flugposition beibehält. Hierbei handelt es sich um den Manövertyp "Null".)

Bei Ansteuerung dieses Manövertypspeichers 220 wird also ein Flugprogramm vom sequenziellen Typ ausgelesen und an den Autopiloten des Windangriffssystems 100 übertragen. Das Ausgangssignal des Speichers 220 gelangt dabei an einen Sender 221, der die Daten emittiert und einem Empfänger 113 des Windangriffssystems 100 zuführt. Vom Ausgang des Empfängers 113 gelangt das Signal in eine Autopiloten-Baugruppe und dort in eine Manöversteuereinheit 114. Diese empfängt die für ein bestimmtes sequenzielles Flugmanöver kennzeichnenden Signale und setzt diese in Kurvenwerte um, die dem Flugprozessor 116 zugeleitet werden, welcher das betreffende Flugmanöver ausführt. Dabei wird der einzustellende Wert in einen Kurvenwertvergleicher 115 überführt, dem andererseits das Eingangssignal des Gierwertmessers 117 zugeführt wird. Der Flugprozessor 116 erzeugt jetzt an seinem betreffenden Ausgang 125 über ein entsprechendes Antriebselement am Drachen 101 durch unsymmetrisches Abbremsen des Drachens 101 oder einer entsprechenden aerodynamischen Verformung Kurvenflug in der vorgegebenen Folge und Dauer. Die anderen aerodynamischen Effekte, welche durch die beiden anderen Ausgänge des Flugprozessors 116 angesteuerte werden sind das Anstellen des Flügels und das Reffen, wie es weiter unten beschrieben wird.

Aus dem Speicher 220b für die Positionierung wird auch die Winsch 240 zum Fieren auf eine bestimmte Seil-Solllänge angesteuert.

Um ein Pendeln um die Hochachse zu vermeiden, wird zusätzlich ein durch einen Hochpass gefiltertes Signal dem Flugprozessor 116 mit versetzter Phasenlage dem Steuersignal überlagert zugeführt, so dass ein Aufschwingen vermieden ist. Während über den Ausgang 125 Gierbewegungen gesteuert werden können, wird über den Ausgang 126 das Anstellen des Tragflügels eingestellt. Bekanntlich lässt sich durch das Maß des Anstellens eines Flügels das Verhältnis von Flugwiderstand und Auftrieb optimieren. Über einen weiteren Ausgang 127 kann das Reffen des Drachens 101 eingeleitet werden. Ein Reffen verändert den Auftrieb und Widerstand und kann bei einzelnen Flugmanövern erforderlich sein.

Da der Drachen fest am Zugseil geführt ist, wird er durch die Zugwirkung des Seils in seinem Auftriebsschwerpunkt bezüglich seiner Roll- und Neigungsbewegungen automatisch stabilisiert. Um aber auch hier ein Schwingen auszuschließen, wird in entsprechender Weise jeweils ein Lagesignal von einem Rollgeber 119 und einem Neigungsgeber 120 über entsprechende invertierende Hochpassfilter 121 und 122 zum Flugprozessor übermittelt, so dass ruckartige Lageänderungen des Windangriffselements 101 vermieden und kompensiert werden.

Wenn der Drachen sich also in seiner vorgegebenen Position befindet (am Ausgang des Vergleichers 218 erscheint ein diesen Zustand kennzeichnendes Ausgangssignal), so wird der ausgewählte Manövertyp ausgelesen, welche den Drachen dazu veranlasst, ein vorgegebenes zyklisches Flugprogramm auszuführen. Ist dieser Manövertyp übertragen, erfolgt die Steuerung selbsttätig vom Autopiloten des Windangriffselements und die Einheit 200 braucht nicht mehr zu reagieren, sofern der Drachen nicht durch unvorhergesehene Ereignisse seine Sollposition verlässt.

Stimmt die Sollposition des Windangriffselements 101 nicht mit seiner vorgegebenen Position überein, sei es, dass sich die Vorgabeposition, welche aus dem Speicher 212 ausgelesen wird, verändert hat - was auch beim Setzen des Drachens der Fall ist -, oder sei es, dass der Drachen im Laufe des Manövrierens seine Position verlassen hat, so verschwindet das Ausgangssignal am Ausgang des Vergleiches 218, und der über das Schaltglied 219 aktivierte Manövertyp des Speichers 220 endet. Am Ausgang des Speichers für den Manövertyp 220 (linker Teil) erscheint das Signal "Null", was vom Autopiloten des Windangriffssystems 100 dahingehend interpretiert wird, dass das zuletzt eingespeicherte Manöver nicht mehr ausgeführt wird. Statt dessen wird die Ist-Position des Drachen, welche aus dem Speicher 213 ausgelesen wird und über GPS ermittelt wurde, mit der Soll-Position aus dem Speicher 212 mittels einer Positionskorrigiereinheit 221 verglichen und ein Manöver ermittelt, welches den Drachen in die Sollposition führt. Die Korrigiereinheit 221 ist wieder als Nachschlagetabelle ausgebildet, wobei die Soll- und die Ist-Position (wieder bezogen auf das Schiff) zu einem gemeinsamen Adressiersignal zusammengefasst werden und die Kennzeichnung eines entsprechenden Korrekturmanövers des Windangriffselements von der Ist-Position A in die Soll-Position B ausgelesen wird. Es ist nämlich zu beachten, dass je nach Start und Zielpunkt (und auch gegebenenfalls abhängig von den Wind- und Wellenbedingungen) unterschiedliche Manöver gewählt werden müssen, um den Drachen zu manövrieren. Mit den angegebenen Maßnahmen können aber beliebige Drachenmanöver ausgewählt und ausgeführt werden.

Spielen Wind- und Seegang bei den auszuführenden Manövern eine Rolle, so können diese Daten vom Speicher 211 durch die Nachschlagetabellenspeicher 212 und 221 "durchgeschleift" werden, so dass sie im Datensatz für die Auswahl eines spezifischen Manövers noch vorhanden sind und ein geeignetes Manöver ausgewählt werden kann. Hierbei geht es allerdings nicht um den Ausgleich einzelner Ereignisse, sondern um generelle Einstellungsrichtlinien, welche beispielsweise beinhalten können, dass bei hohem Seegang der Drachen relativ so geflogen wird, dass die durch die Wellenrichtung auf das Wasserfahrzeug wirkenden Kräfte möglichst kompensiert werden können. So wäre also bei stark krängendem Schiff eine Dracheposition mit Querkomponente und bei stark stampfendem Schiff eine Vorauskomponente zu bevorzugen. Aus diesem Grunde wird ein Ausgangssignal des Blocks 231 zur Erfassung des Seegangs direkt dem Block 211 zugeleitet, um eine Information zuzufügen, welche bei der Auswahl der entsprechenden Drachenposition und Manövrierung im oben beschriebenen Sinne mitwirkt. Eine weitere Funktion dieser Verbindung besteht darin, Teile von Flugmanövern so auszuwählen, dass sie den Beschleunigungen aufgrund des Seegangs entgegenwirken. Hierzu gehört, dass Manöver mit zyklischen Flugbahnen, bei denen unterschiedliche Zugkräfte am Zugseil zu unterschiedlichen Zeiten einwirken, so geflogen werden, dass diese Kräfte phasenversetzt zu den Beschleunigungen auftreten, welche durch den Seegang hervorgerufen werden. Auf diese Weise werden die Schiffsbewegungen insgesamt herabgesetzt. Diese Kompensation bzw. Herabsetzung von Schiffsbewegungen durch unterschiedliche Zugkräfte, welche durch das Manövrieren hervorgerufen werden, stören die übrigen angewandten Verfahren für die Seegangskompensation nicht. Dies hat seinen Grund darin, dass von vornherein reduzierte Schiffsbewegungen weniger Aufwand bei der Reduzierung von deren Auswirkungen auf die Drachenflugbahn erfordern. Wegen der Kompensation der einzelnen Schiffsbewegungen wird auf die Beschreibung des Blocks 231 weiter unten verwiesen.

Für den Positionswechsel wird der rechte Teil des Speichers 220 über ein Schaltglied 222 mit dem aus der Korrigiereinheit 221 ausgelesenen Datensatz adressiert, wobei das Schaltglied 222 vom Ausgangssignal des Vergleichers mittels eines Inverters 223 aktiviert wird, wenn das Schaltglied 219 nicht aktiviert ist, also Soll- und Ist-Position ungleich sind.

Des Weiteren kann auch die Flugstabilität des Windangriffselements für seine Position eine Rolle spielen. Ein am Drachen vorgesehener Mehrrichtungs-Staudruckmesser 111 bildet einerseits einen Windmesser und übermittelt andererseits für die in Flugrichtung gemessene Komponente den Zustand einer zu geringen Anströmung des Drachens durch ein entsprechendes Signal, welches zusammen mit der Erzeugung einer Positionswechselmanövers auch die Winschsteuerung 240 ansteuert, wodurch der Drachen bei dem Positionswechsel beschleunigt wird, so dass die Anströmung wieder heraufgesetzt wird. (Es ist ersichtlich, dass die Winsch auch bei "gewollten" Positionsänderungen aufgrund von Wind- und Wellendaten über den rechten Teil des Speichers 220b mit angesteuert werden kann, damit beispielsweise eine Änderung der Höhe des Windangriffselements herbeigeführt werden kann.)

Für die Ermittlung der wahren Windrichtung und Windgeschwindigkeit weist der Windmesser in unterschiedliche Richtungen gerichtete Staurohre mit Druckdosen auf, welche getrennt ausgewertet werden. Aus den Druckwerten der drei rechtwinklig zueinander gerichteten Druckdosen mit den höchsten Druckwerten lässt sich die Richtung und Geschwindigkeit des Windes in Bezug auf die Ausrichtung des Windmessers 111 bestimmen. Wird das Ausgangssignal des Magnetfeld-Sensors 128, der eine Brückenschaltung aus magnetisch empfindlichen Widerständen enthält und somit die Ermittlung der Richtung der Feldlinien des Erdmagnetfeldes ermöglicht, mit in Betracht gezogen, so kann die Richtung des Windes auf die Nordrichtung bezogen werden und kann somit als Richtung des scheinbaren Windes beim Windangriffselement zu Wasserfahrzeug hin übertragen werden. Dort erfolgt dann gegebenenfalls noch die Korrektur von magnetisch Nord zu geographisch Nord.

Ein zu dem Block 211 gerichteter Pfeil deutet an, dass dabei die normale Navigation des Drachens außer Funktion gesetzt wird. Über ein Oder-Gatter 224, das dem Inverter 223 vorgeschaltet ist, wird auch die übrige normale Manöversteuerung unterbunden. (Dies gilt entsprechend auch für die nachfolgend zu beschreibenden Blöcke 228, 229, 230 und 232, welche weitere Sonderfunktionen auslösen. Die zugehörigen Signalverbindungen, sind dort aber aus Gründen der Übersichtlichkeit weggelassen worden.)

Über den Block 228 wird das Notfallmanöver "Notabwurf" durch Auswahl und Start des zugehörigen Manövertyps über den rechten Teil des Manövertypspeichers 220b eingeleitet, der die jeweiligen Programmierungen enthält. Dieses Manöver wird notwendig, wenn vom Windangriffselement für das Schiff durch ungünstige Umstände oder einen Unfall eine große Gefahr ausgeht (z.B. durch Zusammenstoss mit einem Hindernis). Bei diesem Manöver wird das Windangriffselement vollständig vom Schiff getrennt.

Über die Blöcke "Setzen" 229 und "Bergen" 230 werden die entsprechenden Manöver durch Auswahl und Start des betreffenden Manövertyps über den rechten Teil des Manövertypspeichers 220b eingeleitet, der die jeweiligen Programmierungen enthält.

Über einen Block 231 "Schiffsbewegungen" wird über einen entsprechend ausgerichteten Beschleunigungsaufnehmer die in Richtung des Zugseils gerichtete Beschleunigungskomponente ermittelt und nach Integration ein Signal generiert, welches die Schiffsbewegungen in Richtung des Zugseils beschreibt. Dieses Signal wird dem Bord-GPS-Empfänger zugeführt, welcher ein für die Position der Winschsteuerung 240 korrigiertes Positions-Signal liefert, falls der Empfänger bzw. die Antenne nicht selbst in dieser Position montiert ist. Würde dieses GPS-Positionssignal unmittelbar zusammen mit dem über den Empfänger 214 empfangenen GPS-Positions-Signal des Drachensystems 100 ausgewertet und zu Führung des Drachens 101 verwendet, würde dieser in seiner Steuerung den Seegangsbewegungen der Winsch folgen. Da dieser aber seine Manöver in Bezug auf eine gedachte beruhigte Schiffsposition fliegen soll, wird das integrierte Signal des Beschleunigungsaufnehmers in Block 231 zusätzlich dem GPS-Empfänger 215 zugeführt, um (als Störung) von dem Signal subtrahiert zu werden, welches dem Block 216 zur Verarbeitung zugeführt wird, so dass dort das Positionssignal einer "beruhigten Plattform" verarbeitet wird. Auf diese Weise fliegt der Drachen 101 Manöver, die von Seegangsstörungen befreit sind. Es ist nämlich ersichtlich, dass sich hauptsächlich die in Zugseil-Richtung wirkenden Seegangs-Anteile für das Flugobjekt bemerkbar machen, wohingegen quer dazu gerichtete Anteile lediglich zu einer gerade bei langem Zugseil verschwindenden Änderung der Winkel α und β des Flugvektors beitragen und somit vernachlässigbar sind.

Um bei dem dargestellten Ausführungsbeispiel nicht permanent in die Situation zu kommen, bei starkem Seegang ein anstehendes Flugmanöver durch Feststellung einer Abweichung am Differenzblock 218 zu unterbrechen und einen gesteuerten "Flug" in die korrekte Position (in diesem Fall durch Aktivierung der Winschsteuerung 240 über den rechten Manöverblock 220b) ausführen zu müssen, besteht vom Block 231 eine Direktverbindung zur Winschsteuerung 240. Diese erhält unmittelbar den Befehl, entsprechend der Feststellung der Seegangsbewegung in Zugseilrichtung durch den Block 231 zu fieren und zu holen, so dass die Schiffsbewegungen für den Drachen unmittelbar ausgeglichen sind. Erst, wenn dieser Ausgleich aus irgendeinem Grunde nicht mehr ausreichend sein sollte, wird eine Positionskorrektur durch ein entsprechendes Manöver ausgelöst.

Um auch Manöver manuell auslösen zu können, sind über eine Bedienereingabe 232, welche Teil des Bedieneroberfläche 205 in Figur 2 ist, die entsprechenden Eingabebefehle möglich. Über entsprechende Befehle können in dem linken Teil 220a des Manöverspeichers für manuelle Befehle unter Unterdrückung der übrigen Signalausgabe aus diesem Speicher direkt Steuerbefehle an die Autopiloteneinheit und die Winschsteuerung 240 übermittelt werden. Hierbei handelt es sich um die Funktionen "Links", "rechte", "Gerade", "Reffen", "Entreffen", "Anstellen (+)", "Anstellen (-)", "Winsch (+)" und "Winsch (-)". Alle Befehle können in ihrer Intensität moduliert werden.

Bei einer in der beschriebenen Ausführung eingeschlossenen Variante erfolgt, ein "vorausschauendes Manövrieren" in der Weise, dass in das System zur Berechnung der aktuellen Position des Windangriffselements fiktive Wind- und Kursdaten eingegeben werden und die sich dann einstellende Konfiguration zur Information angezeigt wird. Hieraus kann dann die Schiffsführung das vorhersehbare Verhalten des Systems abschätzen und die Navigation entsprechend einstellen. Diese Mehrfachbearbeitung der Daten nach Art der Eventualvorausschau ist in Figur 3 durch Mehrfachwinkel an den Ecken verschiedener Speicherelemente dargestellt, was andeuten soll, dass die Inhalte dieser Speicher unabhängig von der aktuellen Prozesssteuerung mehrfach ausgewertet werden. Hierbei sind also zusätzliche Speichermittel und Vergleichermittel vorgesehen, welche eine Speicherung von vorangehenden Zeitpunkten zugeordneten Signalen mit zeitlich später erscheinenden Signalen in der Weise ermöglichen, dass zeitlich aufeinander folgende Manöverzustände unter Zugrundelegung verschiedener - auch fiktiver - Eingangsdaten vergleichbar sind.

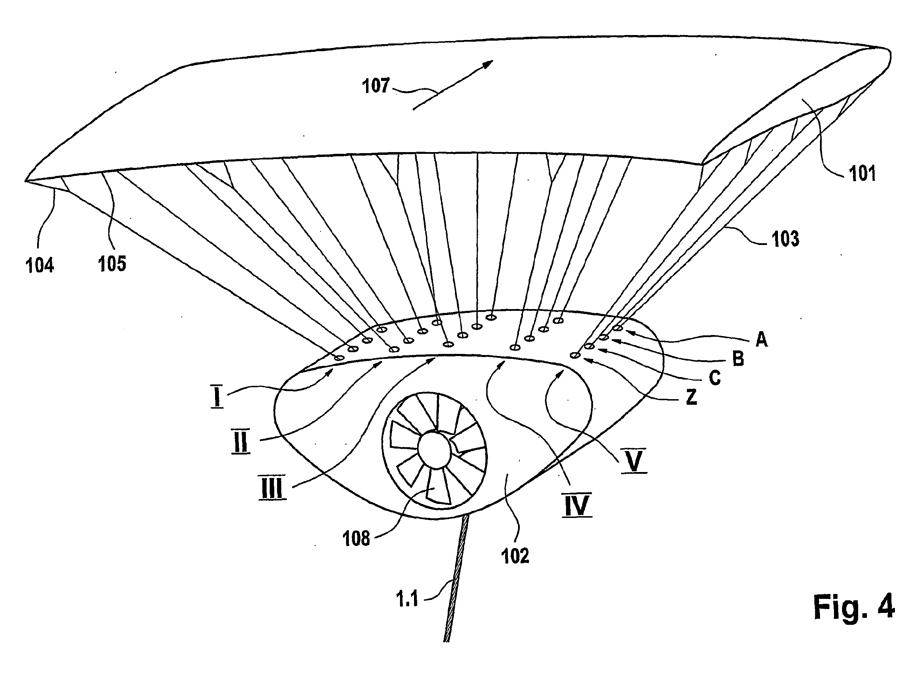

Die Steuerung des das Windangriffselement bildenden Gleitschirms ist in Figur 4 näher dargestellt. Das in Fig. 4 dargestellte Windangriffselement 101 ist wiederum mit dem an dem Zugseil 1.1 befestigten stromlinienförmig ausgestalteten Behältnis 102 für die Steuerung verbunden. Die von dem Behältnis 102 ausgehenden Steuerleinen 103 sind in Form einer Punktmatrix angeordnet, wobei die Spalten der Matrix mit römischen Zahlen I bis V versehen sind und sich in Flugrichtung erstrecken. Die Zeilen sind mit Großbuchstaben bezeichnet, welche in ihrer Folge entgegengesetzt zur Flugrichtung ausgerichtet sind. Von Bedeutung ist hierbei, dass die einzelnen Leinen, welche in Verzweigungen 104 in Form eines Leinenbaums übergehen, die mit einer unteren textilen Deckschicht 105 verbunden sind, einzeln oder in Gruppen verkürz- oder verlängerbar sind, um die aerodynamische Anpassung des Gleitschirms zu bewirken. Die Flugrichtung ist wieder mit dem Pfeil 107 bezeichnet.

Die matrixartig angeordneten Steuerleinen 103 enden in dem strömungsgünstig ausgestalteten Behältnis 102, welches in seiner Richtung nach vorne verrundet ist. Eine Windturbine 108 wird von der durch sie hindurch tretenden Luftströmung angetrieben und ist mit einem Generator verbunden, welcher die Umwandlung von Windenergie in die zum Betreiben der weiter unten zu beschreibenden Antriebselemente zur Einstellung der Steuerleinen 103 bewirkt. Hierbei können unterschiedliche Energiearten zur Anwendung kommen. Bevorzugt sind elektrische Energie und pneumatische Energie. Bei der Verwendung von pneumatischer Energie ist der Generator als Verdichter ausgeführt und stellt die Hilfsenergie unmittelbar zur Verfügung, wie an Hand der nachfolgenden Figuren beschrieben wird.

Das in Fig. 5 dargestellte Wasserfahrzeug ist entsprechend der Darstellung in Figur 1 wiedergegeben. Es zeigt verschiedene achtförmige Flugfiguren 160 bis 162' für das Windangriffselement 101. Diese Flugfiguren werden durch das Windangriffselement geflogen, um die Geschwindigkeit des Windangriffselements relativ zum Wind zu vergrößern und um damit auch den Auftrieb, entsprechend dem Vortrieb im vorliegenden Anwendungsfall zu vergrößern. Diese Flugfiguren gehören zu unterschiedlichen scheinbaren Windrichtungen, wobei ersichtlich ist, dass die gewählte Darstellung sich auf das Schiff 4 bezieht.

In Bezug auf einen ortsfesten Beobachter gestalten sich die Flugfiguren sinusförmig, wobei die Sinusformen in Fahrtrichtung des Schiffes die achtförmigen Verwindungen zeigen.

Es ist ersichtlich, dass die achtförmigen Figuren bei achterlichem Wind und vor dem Schiff fliegendem Windangriffselement horizontal gerichtet sind. Damit kann die volle Breite des Windfensters ausgenutzt werden und die vertikale Höhenabweichung gering gehalten werden, entsprechend der Flugfigur 160. Diese ist in Draufsicht mit der achterlichen Windrichtung W in Fig. 5a dargestellt.

Die Flugfiguren 161 und 161' ergeben sich bei raumendem Wind. Sie beinhalten zur Senkrechten geneigte Achtfiguren 161 bzw. 161', wobei die Situation in Draufsicht in Fig. 5b wiedergegeben ist. (Die mit einem " ' " versehenen Bezugszeichen stellen jeweils die symmetrische Steuerbordfigur dar, während bei der Draufsicht jeweils von der Backbordausrichtung ausgegangen wird. Die geneigte Acht-Figur stellt den Übergang zur senkrecht stehenden Acht gemäß Flugfigur 162 bzw. 162' dar, welche senkrecht stehend ausgeführt wird. Die Situation ist in Draufsicht in Fig. 5c wiedergegeben. Hier wird mit einer senkrecht stehenden Achtfigur geflogen, da die Breite des zur Verfügung stehenden Windfensters gering ist und zu dessen Ausnutzung eher eine größere vertikale Höhendifferenz in Kauf genommen wird.

Bei der Schrägstellung der Flugfigur 161 ist es unbedeutend, ob die Neigung mit Anstieg zu Fahrtrichtung hin oder quer dazu gewählt wird, da auf beide Weisen bei Winddrehung ein kontinuierlicher Übergang zur Flugfigur 162 erzielbar ist.

Während bei achterlichem Wind bei quer zur Windrichtung fliegendem Windangriffselement das Seil im Wesentlichen genau voraus gerichtet ist, und somit Zugrichtung und Auftriebsrichtung des Windangriffselements weitgehend zusammenfallen, ergeben sich hier bei raumenden Winden Differenzen. Einerseits soll die Energie des Windes maximal ausgenutzt werden, indem die Flugrichtung des Windangriffselements möglichst quer zur Flugrichtung gerichtet ist und andererseits soll das Zugseil möglichst in Fahrtrichtung des Schiffes 4 wirken. Da in beiden Fällen die Abweichung zur optimalen Richtung der Cosinus-Funktion folgt, wird das Windangriffselement bevorzugt so geführt, dass der Winkel ϕ als Abweichung der Seilrichtung vom Kurs etwa dem halben Winkel der Abweichung der scheinbaren Windrichtung zum Kurs ϕ/2 entspricht. Auf diese Weise ist die Zugkraft des Windangriffselements in Kursrichtung maximiert. Die Winkel ϕ und ϕ/2 sind aus den Figuren 5b und 5c entnehmbar.

Von Bedeutung ist bei der Führung des Windangriffselements bei raumen Winden, dass die Flugfigur-Acht nicht wie bei achterlichem Wind senkrecht zur Windrichtung steht, sondern einen Winkel dazu einnimmt, nämlich im vorliegenden Beispiel ϕ/2. Dies könnte bei stationär stehendem Windangriffselement durch eine entsprechende Einstellung des Anstellwinkels des Tragflügelprofils zum Wind kompensiert werden. Da sich aber die Ausrichtung des Windangriffselements in Bezug auf den schräg aufkommenden Wind auch stets ändert, muss entsprechend die Anstellung des Profils zum Wind durch die entsprechende Steuereinrichtung so verändert werden, dass der Drachen 101 die entsprechende Flugfigur ausführt.

Es ist ersichtlich, dass statt einer Acht als Flugfigur auch andere geometrische Figuren geflogen werden können, wobei jede aus. Sicht des Wasserfahrzeugs geschlossene Flugfigur, die im Wesentlichen haarnadelförmig-, kreis-, acht-, doppelacht- oder mehrfachachtförmig geschlossen ist, in Betracht kommt. Insbesondere wird das Windangriffselement an den seitlichen Rändern des Windfensters bei horizontal liegender Achtform in Richtung nach unten geführt, so dass hier die größte Geschwindigkeit aufgenommen wird. Die geneigten Flugbahnen bringen dann bei geringerer Geschwindigkeit eine genügende Vertikalkomponente zum Anheben des Seils beim Ansteigen.

Insgesamt wird jede Flügfigur durch die Steuermittel jeweils so eingestellt, dass die mittlere Zugkraftkomponenten in Kursrichtung des Wasserfahrzeugs unter Berücksichtigung der jeweiligen Verweilzeiten des Windangriffselements in den zu den jeweiligen Zugkraftkomponenten gehörigen relativen Positionen in Bezug auf das Wasserfahrzeug ein Maximum ist.

Aus Fig. 5d ist ersichtlich, wie das Windangriffselement vorzugsweise bei Kursen hart am Wind geführt wird. Aus Fig. 5e ist ersichtlich, wie das Windangriffselement vorzugsweise bei Halbwind-Kursen geführt wird.

In Fig. 6 ist dargestellt, wie bei einem Wasserfahrzeug 4 auch zwei (oder mehrere) Windangriffselemente 101 und 101' gleichzeitig an verschiedenen Zugseilen geführt werden können. Es ist auch die Führung mehrerer Windangriffselemente an einem gemeinsamen Zugseil denkbar, wobei die Windangriffselemente an getrennten Zugseilen so geführt werden, dass eine Überschneidung der Flugfiguren verhindert ist. Dabei können mehrere Windangriffselemente durch Koppelelemente derart gesteuert werden, dass sie sequentiell eine kreis- oder achtförmige Flugfigur durchlaufen.

In Fig. 7 ist als ein Ausführungsbeispiel der Erfindung ein Wasserfahrzeug 4 mit einem Windangriffselements 101 in der "Sicherheitsposition" dargestellt, wobei hierbei das Windängriffselement so über das Schiff gestellt ist, dass kaum oder nur wenig Zugkraft aufgebracht wird. Auf diese Weise ist sichergestellt, dass das Windangriffselement nur eine geringfügige Störung des Schiffsbetriebs darstellt. Die räumliche Ausdehnung des Systems Schiff/Windangriffselement ist in dieser Stellung deutlich reduziert, so dass dieser Betriebszustand ideal für Gefahrsituationen ist. Durch frühzeitiges Einnehmen dieser Position können drohende Zusammenstöße vermieden werden. Diese Position ist auch vorteilhaft für das Setzen und Bergen des Windangriffelements.

In Fig. 8a und b eine schematische Darstellung der Steuerung der Flugfiguren in Koordination zu den Schiffsbewegungen in der Weise dargestellt, dass die Schiffsbewegungen und die Teile der Flugfiguren, welche den größten Kraftanteil in Seilrichtung beinhalten, koordiniert sind. Bei der in Fig. 8a dargestellten liegenden Acht sind Flugbahnteile mit hoher Fluggeschwindigkeit, welche vertikal nach unten gerichtet sind, mit I und III bezeichnet. Hier wird jeweils die größte Kraft in Zugrichtung aufgebracht. Demgegenüber werden die schräg ansteigenden Bereiche der Flugbahn mit II und IV bezeichnet. Hier treten kleinere Fluggeschwindigkeiten auf und die Kräfte sind also relativ kleiner.

In Figur 8b sind die Bewegungen in Seilrichtung dargestellt, wie sie sich bei Wellengang darbieten. Hier sind die entsprechenden Schiffsbewegungen mit I bis IV dargestellt, wie sie den entsprechend bezeichneten Teilen der Flugbahn in Fig. 8a zuzuordnen sind. Es ist ersichtlich, dass die Bereiche I und II der Flugbahn mit den größten Kräften in Seilrichtung denjenigen Bereichen der Schiffsbewegungen zugeordnet sind, welche zu den Kräften gegenphasig sind. Die Bereich I und II stellen also "Wellentäler" dar. Auf diese Weise wird erreicht, dass die größten Kräfte wirken, wenn also das Schiff aus den Wellentälern "herauszuziehen" ist, so dass die Schiffsbewegungen maximal kompensiert werden.

Die Erfindung ist nicht an die dargestellten Ausführungsbeispiele gebunden. Andere im Bereich der Erfindung liegende Konfigurationen ergeben sich aus Kombinationen von Unteransprüchen, welche sich dem Fachmann aufgrund der vorliegenden Beschreibung erschließen.

## Patentansprüche

1. Wasserfahrzeug mit Windantrieb, bei dem mindestens ein frei ausfliegendes drachenartiges Windangriffselement (1) mit einem Tragflächenprofil als ausschließlicher Antrieb, als Hilfs- oder als Not-Antrieb nur über ein Zugseil (1.1) mit dem Fahrzeugkörper (4) verbunden ist,
wobei Steuermittel vorgesehen sind, welche das ein Tragflächenprofil aufweisende Windangriffselement (1) mit einem im wesentlichen quer zur Luftströmung des Windes gerichteten Geschwindigkeitsvektor dynamisch auf einer aus Sicht des Wasserfahrzeugs (4) geschlossenen, in Bezug auf die Luftströmung aber im Wesentlichen senkrecht gerichteten wendel- oder sinusförmigen Flugbahn führen; die unterschiedlichen Flugbahnen bzw. ein statischer Flugzustand durch die Steuermittel in Abhängigkeit von Kurs, Windrichtung, Windgeschwindigkeit, Böigkeit und/oder Seegang variabel auswählbar sind; und
die aus Sicht des Wasserfahrzeugs (4) geschlossene Flugbahn im Wesentlichen acht-, doppelacht- oder mehrfachachtförmig geschlossen ist;
**dadurch gekennzeichnet, dass** die Achtform horizontal gerichtet ist, wobei an den seitlichen Rändern des Windfensters das Windangriffselement (1) bei horizontal liegender Achtform in Richtung nach unten geführt wird.

2. Wasserfahrzeug mit Windantrieb, bei dem mindestens ein frei ausfliegendes drachenartiges Windangriffselement (1) mit einem Tragflächenprofil als ausschließlicher Antrieb, als Hilfs- oder als Not-Antrieb nur über ein Zugseil (1.1) mit dem Fahrzeugkörper (4) verbunden ist,
wobei Steuermittel vorgesehen sind, welche das ein Tragflächenprofil aufweisende Windangriffselement (1) mit einem im wesentlichen quer zur Luftströmung des Windes gerichteten Geschwindigkeitsvektor dynamisch auf einer aus Sicht des Wasserfahrzeugs (4) geschlossenen, in Bezug auf die Luftströmung aber im Wesentlichen senkrecht gerichteten wendel- oder sinusförmigen Flugbahn führen; die unterschiedlichen Flugbahnen bzw. ein statischer Flugzustand durch die Steuermittel in Abhängigkeit von Kurs, Windrichtung, Windgeschwindigkeit, Böigkeit und/oder Seegang variabel auswählbar sind; und
die aus Sicht des Wasserfahrzeugs (4) geschlossene Flugbahn im Wesentlichen acht-, doppelacht- oder mehrfachachtförmig geschlossen ist;
**dadurch gekennzeichnet, dass** die Achtform vertikal gerichtet ist,
und dass bei vertikal stehenden Achten die Außenkurven der Achten entgegen der herrschenden Windkomponente geflogen werden, damit die auf den das Windangriffselement (1) wirkende Windkomponente relativ am größten ist.

3. Wasserfahrzeug nach Anspruch 1 oder 2, **dadurch gekennzeichnet, dass** die Flugbahn durch die Steuermittel jeweils so gewählt ist, dass die mittlere Zugkraftkomponenten in Kursrichtung des Wasserfahrzeugs (4) unter Berücksichtigung der jeweiligen Verweilzeiten des Windangriffselements (1) in den zu den jeweiligen Zugkraftkomponenten gehörigen relativen Positionen in Bezug auf das Wasserfahrzeug (4) ein Maximum ist.

4. Wasserfahrzeug nach einem der Ansprüche 1 bis 3, **dadurch gekennzeichnet, dass** die Form, Frequenz und Phasenlage der Flugbahn in Bezug auf die Eigenbewegungen des Schiffes (4) so gewählt ist, dass die Gier-, Stampf-, und/oder Rollbewegung des Wasserfahrzeugs (4) mindestens nicht unterstützt, bevorzugt aber gedämpft bzw. kompensiert werden, insbesondere also bezüglich der relevanten Kräftekomponenten in maximalen Zeitbereichen phasenversetzt verlaufen.

5. Wasserfahrzeug nach einem der Ansprüche 1 bis 4, **dadurch gekennzeichnet, dass** bei Vorwindkursen das Windangriffselement (1) Schraubenlinien in Form von liegenden Achten ausführt, während bei Kursen mit mehr raumen Wind die Achten unter zunehmender Verschlankung in eine eher senkrecht stehende Position übergehen, bis sie schließlich in Bezug auf die Luftströmung Sinuslinien bilden, wenn aus Sicht des Wasserfahrzeugs (4) die Achten zu senkrechten Auf- und Ab- Bewegungen mutieren.

6. Wasserfahrzeug nach einem der Ansprüche 1 bis 5, **dadurch gekennzeichnet, dass** die Symmetrielinie der gewählten Form als Senkrechte im Wesentlichen auf der Winkelhalbierenden von Kurs und Verlängerung der Achse der Windrichtung über dem Angriffspunkt der Zugleine am Schiff gelegen ist.

7. Wasserfahrzeug nach einem der Ansprüche 1 bis 6, **dadurch gekennzeichnet, dass** die Flugbahn derart gewählt ist, dass in den Bereichen, in denen die Geschwindigkeit der Luftströmung in Anströmrichtung des Tragflügelprofils (105, 106) ein Maximum ist, die Verweildauer ebenfalls maximiert ist.

8. Wasserfahrzeug nach einem der Ansprüche 1 bis 7, **dadurch gekennzeichnet, dass** die Flugbahn spiegelsymmetrisch zu einer sich parallel zum Horizont erstreckenden oder dazu geneigten Achse ausgebildet ist.

9. Wasserfahrzeug nach einem der Ansprüche 1 bis 8, **dadurch gekennzeichnet, dass** bei einem Kurswechsel oder einer Änderung der Windrichtung der Übergang von einer dynamischen Flugbahn in eine statische Position bzw. umgekehrt derart erfolgt, dass die statische Position auf der Flugbahn gelegen ist.

10. Wasserfahrzeug nach einem der Ansprüche 1 bis 9, **dadurch gekennzeichnet, dass** bei Wind- oder Kurswechsel aufeinander folgende unterschiedliche Flugbahnen durch Morphing ineinander überführbar sind.

11. Wasserfahrzeug nach einem der Ansprüche 1 bis 10, **dadurch gekennzeichnet, dass** bei den Steuermitteln für die Flugbahn die adressierenden Steuerbefehle aus einem Speicher auslesbar sind, bei dem die Adressierung durch Adressendaten erfolgt, welche aus den aktuellen Wind- und Kursdaten und/oder Wellendaten gebildet wird.

12. Wasserfahrzeug nach einem der Ansprüche 1 bis 11, **dadurch gekennzeichnet, dass** die Flugbahnsteuerung, insbesondere bei größerem Seegang, derart erfolgt, dass diejenigen Bahnteile, in denen höhere oder niedrige Zugkräfte im Seil erscheinen, derart mit unerwünschten Schiffsbewegungen (Rollen, Gieren, Stampfen) in der Weise koinzidieren, dass sie diesen entgegenwirken.

13. Wasserfahrzeug nach einem der Ansprüche 1 bis 12, **dadurch gekennzeichnet, dass** zwei oder mehr Windangriffselemente an je einem oder an einem gemeinsamen Zugseil (1.1) geführt werden.

14. Wasserfahrzeug nach einem der Ansprüche 1 bis 13, **dadurch gekennzeichnet, dass** Windangriffselemente (1) an getrennten Zugseilen (1.1) so geführt werden, dass eine Überschneidung der Flugbahnen verhindert ist.

15. Wasserfahrzeug nach einem der Ansprüche 1 bis 14, **dadurch gekennzeichnet, dass** mehrere Windangriffselemente (1) durch Koppelelemente derart gesteuert werden, dass sie sequentiell eine kreis- oder achtförmige Flugbahn durchlaufen.

16. Wasserfahrzeug nach einem der Ansprüche 1 bis 15, **dadurch gekennzeichnet, dass** das Windangriffselement (1) über mindestens ein bei dem Windangriffselement vorgesehenes mit diesem in Wirkverbindung stehendes aktives Antriebselement durch Veränderung seiner aerodynamischen Wirkung zum Führen in eine vorgegebene Position in Bezug auf das Wasserfahrzeug bzw. zum dynamischen Manövrieren veränderbar ist.

17. Wasserfahrzeug nach einem der Ansprüche 1 bis 16, **dadurch gekennzeichnet, dass** Mittel zur Veränderung der aerodynamischen Wirkung des Windangriffselements durch Änderung seiner Ausrichtung, Anstellung und/oder Form vorgesehen sind, wobei die Anstellung und Ausrichtung beim Manövrieren so verändert wird, dass sie der veränderten Anströmrichtung, insbesondere bei nicht quer bzw. senkrecht zur Luftströmung gerichteter Seilrichtung, entspricht.

18. Wasserfahrzeug nach einem der Ansprüche 1 bis 17, **dadurch gekennzeichnet, dass** Mittel zur Veränderung der aerodynamischen Wirkung des Windangriffselements (1) Mittel zur Änderung der Form durch eine symmetrische oder unsymmetrische Änderung des Tragflächenprofils über eine Beeinflussung der Ausrichtung seiner Strömungsabrisskante, durch Verwindung des Tragflächenprofils, durch symmetrische und/oder durch unsymmetrische Änderung der Wölbung des Tragflächenprofils und/oder durch Änderung des Angriffspunkts des Zugseils (1.1) in Bezug auf die Geometrie des Tragflächenprofils (105, 106) einschließen.

19. Wasserfahrzeug nach einem der Ansprüche 1 bis 18, **dadurch gekennzeichnet, dass** zur Energiegewinnung ein durch die Strömung des Wassers außerhalb des Wasserfahrzeugs, insbesondere über eine Schiffsschraube oder Turbine, angetriebener Generator vorgesehen ist, welcher die erzeugte elektrische Energie einem Energiespeicher, insbesondere einem Wasserstoffgenerator mit nachgeordnetem Aufbewahrungsbehältnis zuführt.

## Claims

1. Watercraft having a wind drive, in which at least one free-flying kite-like wind-catching element (1) having an aerofoil profile is connected only via a traction cable (1.1) to the craft body (4) as an exclusive drive, as an auxiliary drive or as an emergency drive,
wherein control means are provided which guide the wind-catching element (1), which has an aerofoil profile, with a velocity vector directed essentially transversely with respect to the air flow of the wind dynamically on a helical or sinusoidal flight path which is closed when viewed from the watercraft (4) but is directed essentially at right angles to the air flow; the various flight paths or a steady flight state can be selected variably by the control means as a function of the course, wind direction, wind speed, gustiness and/or sea state; and the flight path, which is closed when viewed from the watercraft (4), is closed essentially in the form of an eight, a double-eight or a multiple eight;
**characterized in that** the figure of eight is directed horizontally, wherein the wind-catching element (1) is guided in the downward direction at the side edges of the wind window when the figure of eight is located horizontally.

2. Watercraft having a wind drive, in which at least one free-flying kite-like wind-catching element (1) having an aerofoil profile is connected only via one traction cable (1.1) to the craft body (4) as an exclusive drive, as an auxiliary drive or as an emergency drive,
wherein control means are provided which guide the wind-catching element (1), which has an aerofoil profile, with a velocity vector directed essentially transversely with respect to the air flow of the wind dynamically on a helical or sinusoidal flight path which is closed when viewed from the watercraft (4) but is directed essentially at right angles to the air flow; the various flight paths or a steady flight state can be selected variably by the control means as a function of the course, wind direction, wind speed, gustiness and/or sea state; and the flight path, which is closed when viewed from the watercraft (4), is closed essentially in the form of an eight, a double-eight or a multiple eight; **characterized in that** the figure of eight is directed vertically,
and **in that**, in the case of vertical figures of eight, the outer curves of the eights are flown in the opposite direction to the prevailing wind component in order that the wind component acting on the wind-catching element (1) is relatively a maximum.

3. Watercraft according to Claim 1 or 2, **characterized in that** the flight path is in each case selected by the control means such that the mean tensile force components in the course direction of the watercraft (4) are a maximum, taking account of the respective times for which the wind-catching element (1) remains in the relative positions with respect to the watercraft (4) which are associated with the respective tensile force components.

4. Watercraft according to one of Claims 1 to 3, **characterized in that** the shape, frequency and phase angle of the flight path with respect to the movements of the vessel (4) itself are chosen such that the yaw, pitch and/or roll movements of the watercraft (4) are at least not promoted, but are preferably damped or compensated for, that is to say in particular run with a phase offset for maximum time periods with respect to the relevant force components.

5. Watercraft according to one of Claims 1 to 4, **characterized in that**, on courses before the wind, the wind-catching element (1) follows helical lines in the form of horizontal figures of eight, while in the case of courses with wind approaching the beam from astern, the figures of eight merge into a more vertical position, becoming narrower and narrower until, finally, they form sinusoidal lines with respect to the air-flow when the figures of eight mutate into vertical up and down movements when seen from the watercraft (4).

6. Watercraft according to one of Claims 1 to 5, **characterized in that** the line of symmetry of the chosen shape is placed as a vertical essentially on the bisector over the point of the course and the extension of the axis of the wind direction of action of the traction line on the vessel.

7. Watercraft according to one of Claims 1 to 6, **characterized in that** the flight path is chosen such that the time for which it remains in those areas in which the speed of the air flow in the incidence direction of the aerofoil profile (105, 106) is a maximum, is likewise maximized.

8. Watercraft according to one of Claims 1 to 7, **characterized in that** the flight path is mirror-image symmetrical with respect to an axis which extends parallel to the horizon or is inclined with respect to the horizon.

9. Watercraft according to one of Claims 1 to 8, **characterized in that**, when a course change occurs or there is a change in the wind direction, the transition from a dynamic flight path to a static position or vice versa is carried out such that the static position is located on the flight path.

10. Watercraft according to one of Claims 1 to 9, **characterized in that**, in the event of a wind change or course change, successive different flight paths can be merged into one another by morphing.

11. Watercraft according to one of Claims 1 to 10, **characterized in that**, with regard to the control means for the flight path, the addressing control commands can be read from a memory, with the addressing being carried out by address data which is formed from the current wind and course data and/or wave data.

12. Watercraft according to one of Claims 1 to 11, **characterized in that** the flight path control, particularly in a relatively high sea state, is carried out such that those path parts in which higher or low tensile forces appear in the cable coincide with undesirable vessel movements (rolling, yawing, pitching) such that they counteract them.

13. Watercraft according to one of Claims 1 to 12, **characterized in that** two or more wind-catching elements are guided on in each case one or on a common traction cable (1.1).

14. Watercraft according to one of Claims 1 to 13, **characterized in that** wind-catching elements (1) are guided on separate traction cables (1.1) so as to prevent the flight paths from intersecting.

15. Watercraft according to one of Claims 1 to 14, **characterized in that** a plurality of wind-catching elements (1) are controlled by coupling elements such that they pass sequentially through a circular or figure-of-eight flight path.

16. Watercraft according to one of Claims 1 to 15, **characterized in that** the wind-catching element (1) can be varied via at least one active drive element, which is provided at the wind-catching element and is operatively connected to it, by varying its aerodynamic effect, for guidance to a predetermined position with respect to the watercraft and/or for dynamic manoeuvring.

17. Watercraft according to one of Claims 1 to 16, **characterized in that** means are provided for varying the aerodynamic effect of the wind-catching element by varying its alignment, incidence and/or shape, wherein the incidence and alignment are varied during manoeuvring such that they correspond to the changed incidence direction, particularly when the cable direction is not directed transversely or at right angles to the air flow.

18. Watercraft according to one of Claims 1 to 17, **characterized in that** means for varying the aerodynamic effect of the wind-catching element (1) include means for varying the shape by symmetrical or asymmetric variation of the aerofoil profile by influencing the alignment of its flow separation edge, by twisting of the aerofoil profile, by symmetrical and/or by asymmetric variation of the camber of the aerofoil profile and/or by varying the point of action of the traction cable (1.1) with respect to the geometry of the aerofoil profile (105, 106).

19. Watercraft according to one of Claims 1 to 18, **characterized in that** a generator which is driven by the flow of the water outside the watercraft, in particular via a vessel propeller or turbine, is provided for gaining energy, and supplies the electrical energy that is generated to an energy store, in particular to a hydrogen generator with a downstream storage container.

## Revendications

1. Véhicule nautique à propulsion éolienne, dans lequel au moins un élément exposé au vent (1) à vol libre, du type cerf-volant, avec un profil de surface portante, sous la forme d'un seul système de propulsion, sous la forme d'un système de propulsion auxiliaire ou sous la forme d'un système de propulsion de secours, est relié à la coque du véhicule nautique (4) uniquement par l'intermédiaire d'un câble de traction (1.1),
sachant que des moyens de commande sont prévus, par lesquels l'élément exposé au vent (1) avec un profil de surface portante est guidé avec un vecteur de vitesse dirigé sensiblement transversalement au courant d'air du vent, dynamiquement sur une trajectoire de vol de forme hélicoïdale ou sinusoïdale, fermée par référence à une observation à partir du véhicule nautique (4), dirigée par rapport au courant d'air, mais sensiblement perpendiculairement ;
les différentes trajectoires de vol ou une position de vol statique peuvent être choisies de manière variable par les moyens de commande en fonction de la route, de la direction du vent, de la vitesse du vent, de la violence du vent et/ ou de la houle ; et
la trajectoire de vol, fermée par référence à une observation à partir du véhicule nautique (4), est fermée sensiblement en forme de huit, de double huit ou de multiples huit ;
**caractérisé en ce que** la forme en huit est orientée horizontalement, sachant qu'au niveau des bords latéraux de la fenêtre de vent, l'élément exposé au vent (1) est guidé vers le bas lorsque la forme de huit est disposée horizontalement.

2. Véhicule nautique à propulsion éolienne, dans lequel au moins un élément exposé au vent (1) à vol libre, du type cerf-volant, avec un profil de surface portante, sous la forme d'un seul système de propulsion, sous la forme d'un système de propulsion auxiliaire ou sous la forme d'un système de propulsion de secours, est relié à la coque du véhicule nautique (4) uniquement par l'intermédiaire d'un câble de traction (1.1),
sachant que des moyens de commande sont prévus, par lesquels l'élément exposé au vent (1) avec un profil de surface portante est guidé avec un vecteur de vitesse, dirigé sensiblement transversalement au courant d'air du vent, dynamiquement sur une trajectoire de vol de forme hélicoïdale ou sinusoïdale, fermée par référence à une observation à partir du véhicule nautique (4), dirigée par rapport au courant d'air, mais sensiblement perpendiculairement ;
les différentes trajectoires de vol ou une position de vol statique peuvent être choisies de manière variable par les moyens de commande en fonction de la route, de la direction du vent, de la vitesse du vent, de la violence du vent et/ ou de la houle ; et
la trajectoire de vol, fermée par référence à une observation à partir du véhicule nautique (4), est fermée sensiblement en forme de huit, de double huit ou de multiples huit ;
**caractérisé en ce que** la forme en huit est orientée verticalement et **en ce que**, lorsque les huit sont disposés verticalement, les courbes extérieures des huit sont entraînées en vol dans le sens opposé à la composante dominante du vent, afin que la composante du vent agissant sur l'élément exposé au vent (1) soit relativement au maximum.

3. Véhicule nautique selon la revendication 1 ou 2, **caractérisé en ce que** la trajectoire de vol est choisie dans chaque cas par les moyens de commande de telle sorte que la composante médiane de la force de traction dans la direction du cap du véhicule nautique (4) est un maximum, en tenant compte des temps de séjour respectifs de l'élément exposé au vent (1) dans les positions relatives, appartenant à la composante de force de traction respective, par rapport au véhicule nautique (4).

4. Véhicule nautique selon l'une quelconque des revendications 1 à 3, **caractérisé en ce que** la forme, la fréquence et la longueur de phase de la trajectoire de vol par rapport aux mouvements propres du véhicule nautique (4) sont choisies de telle sorte que le mouvement d'embardée, le tangage et/ou le roulis du véhicule nautique (4) ne soient au moins pas favorisés, mais de préférence amortis ou compensés, en particulier s'étendent donc par rapport à la composante de force significative en étant décalés en phase dans des zones de temps maximales.

5. Véhicule nautique selon l'une quelconque des revendications 1 à 4, **caractérisé en ce que**, avec des allures de vent arrière, l'élément exposé au vent (1) décrit des lignes hélicoïdales en forme de huit couchés, alors qu'avec des allures de vent plus portant, les huit se transposent, moyennant un amincissement progressif, dans une position plutôt verticale, jusqu'à ce qu'ils forment finalement des lignes sinusoïdales par rapport au courant d'air, lorsque, par référence à une observation à partir du véhicule nautique (4), les huit se muent en mouvements verticaux vers le haut et le bas.

6. Véhicule nautique selon l'une quelconque des revendications 1 à 5, **caractérisé en ce que** la ligne de symétrie de la forme choisie est posée en tant que verticale sensiblement sur la bissectrice du cap et le prolongement de l'axe de la direction du vent au-dessus du point d'application du câble de traction sur le véhicule nautique.

7. Véhicule nautique selon l'une quelconque des revendications 1 à 6, **caractérisé en ce que** la trajectoire de vol est choisie de telle sorte que, dans les zones dans lesquelles la vitesse du courant d'air est au maximum dans la direction de soufflage du profil de surface portante (105, 106), le temps de séjour est également maximisé.

8. Véhicule nautique selon l'une quelconque des revendications 1 à 7, **caractérisé en ce que** la trajectoire de vol est réalisée symétriquement à un axe orienté parallèlement à l'horizon ou incliné par rapport à l'horizon.

9. Véhicule nautique selon l'une quelconque des revendications 1 à 8, **caractérisé en ce que**, dans le cas d'un changement de cap ou d'un changement de la direction du vent, la transition depuis une trajectoire de vol dynamique vers une position statique ou inversement se produit de telle sorte que la position statique est située sur la trajectoire de vol.

10. Véhicule nautique selon l'une quelconque des revendications 1 à 9, **caractérisé en ce que**, en cas de changement de vent ou de cap, différentes trajectoires de vol successives peuvent être amenées l'une dans l'autre par morphage.

11. Véhicule nautique selon l'une quelconque des revendications 1 à 10, **caractérisé en ce que** dans les moyens de commande de la trajectoire de vol, les instructions de commande adressables peuvent être chargées à partir d'une mémoire, dans laquelle l'adressage est effectué au moyen de données d'adresse, qui sont formées à partir des données actuelles du vent et de la route et/ou des données des vagues.

12. Véhicule nautique selon l'une quelconque des revendications 1 à 11, **caractérisé en ce que**, en particulier en cas de houle relativement forte, la commande de la trajectoire de vol s'effectue de telle sorte que les parties de la trajectoire, dans lesquelles apparaissent des forces de traction plus élevées ou plus faibles dans le câble, coïncident à des mouvements indésirables du bateau (roulis, embardée, tangage), de telle sorte qu'elles s'opposent à ceux-ci.

13. Véhicule nautique selon l'une quelconque des revendications 1 à 12, **caractérisé en ce que** deux ou plusieurs éléments exposés au vent sont guidés chacun sur un câble de traction respectif ou sur un câble de traction (1.1) commun.

14. Véhicule nautique selon l'une quelconque des revendications 1 à 13, **caractérisé en ce que** des éléments exposés au vent (1) sont guidés sur des câbles de traction (1.1) séparés, de manière à éviter un croisement des trajectoires de vol.

15. Véhicule nautique selon l'une quelconque des revendications 1 à 14, **caractérisé en ce que** plusieurs éléments exposés au vent (1) sont commandés par des éléments de couplage, de telle sorte qu'ils parcourent séquentiellement une trajectoire de vol circulaire ou en forme de huit.

16. Véhicule nautique selon l'une quelconque des revendications 1 à 15, **caractérisé en ce que** l'élément exposé au vent (1) peut être modifié par au moins un élément de propulsion actif, prévu sur l'élément exposé au vent et relié de manière active à celui-ci, par la variation de son action aérodynamique pour le guidage dans une position prédéfinie par rapport au véhicule nautique ou par rapport à la manoeuvre dynamique.

17. Véhicule nautique selon l'une quelconque des revendications 1 à 16, **caractérisé en ce qu'**il est prévu des moyens pour modifier l'action aérodynamique de l'élément exposé au vent par la variation de son orientation, son incidence et/ou sa forme, l'incidence et l'orientation étant modifiées en cours de manoeuvre, de telle sorte qu'elles correspondent à la direction de soufflage modifiée, en particulier lorsque la direction du câble n'est pas orientée transversalement ou perpendiculairement au courant d'air.

18. Véhicule nautique selon l'une quelconque des revendications 1 à 17, **caractérisé en ce** des moyens pour modifier l'action aérodynamique de l'élément exposé au vent (1) englobent des moyens pour modifier la forme par une variation symétrique ou asymétrique du profil de surface portante sous l'effet d'une influence sur l'orientation de son bord de décollement des filets d'air, par le vrillage du profil de surface portante, par la variation symétrique et/ou la variation asymétrique de la courbure du profil de surface portante et/ou par la variation du point d'application du câble de traction (1.1) par rapport à la géométrie du profil de surface portante (105, 106).

19. Véhicule nautique selon l'une quelconque des revendications 1 à 18, **caractérisé en ce qu'**en vue d'un gain d'énergie, il est prévu un générateur, qui est actionné par le courant de l'eau en dehors du véhicule nautique, en particulier par l'intermédiaire d'une hélice ou turbine et qui achemine l'énergie électrique produite vers un accumulateur d'énergie, en particulier un générateur d'hydrogène avec un réservoir de stockage monté en aval.
